# EUROPÄISCHE PATENTSCHRIFT

(11) **EP 3 010 213 B1**
(45) Veröffentlichungstag und Bekanntmachung des Hinweises auf die Patenterteilung: **24.01.2018**
(21) Anmeldenummer: 15190322.6
(22) Anmeldetag: 17.10.2015
(51) Int. Cl.: H04M 1/725, G06F 9/44, G08B 25/01, G08B 25/08

(54) **AUTOMATISIERTES ABSETZEN EINER NOTFALLNACHRICHT BEI EINEM NOTRUF**
AUTOMATIC SENDING OF AN EMERGENCY MESSAGE IN CASE OF AN EMERGENCY CALL
ENVOI AUTOMATIQUE D'UN MESSAGE D'URGENCE EN CAS D`UN APPEL D`URGENCE

(30) Priorität: 17.10.2014 DE 102014115160
(43) Veröffentlichungstag der Anmeldung: 20.04.2016
(73) Patentinhaber: App-Sec-Network UG (haftungsbeschränkt), 12347 Berlin (DE)
(72) Erfinder: Muchow, Andreas, 12359 Berlin (DE)
(74) Vertreter: Brandt & Nern Patentanwälte

(56) Entgegenhaltungen:
- EP-A2- 0 936 794
- EP-A2- 1 189 470
- CN-A- 1 582 010
- DE-U1-202009 013 305
- US-A1- 2010 296 642
- US-B1- 8 249 547
- US-B1- 8 249 549
- "HandHelp", , 21. Juli 2014 (2014-07-21), XP055254988, Gefunden im Internet: URL:http://web.archive.org/web/20140721044 610/http://www.app-sec.de/sites/default/fi les/manuals/handhelp_handout_de_1.0.pdf [gefunden am 2016-03-03]

## Beschreibung

Die Erfindung betrifft eine Lösung, welche es einer sich in einer Notfallsituation befindenden oder Zeuge einer solchen Notfallsituation werdenden Person ermöglicht, mittels eines mobilen Telekommunikationsendgeräts (TEG) oder einer mit einem solchen TEG gekoppelten Endgeräteeinrichtung eine wichtige Informationen zu der Notfallsituation enthaltende Nachricht automatisiert zu generieren und zu versenden. Entsprechendes geschieht dabei insbesondere barrierefrei, so dass das Absetzen einer Notfallnachricht bei einem Notruf im Grunde jedem mit der erfindungsgemäßen Lösung ausgestatteten Menschen unabhängig von der Art einer möglicherweise bei ihm bestehenden gesundheitlichen, biologischen oder sonstigen physischen Beeinträchtigung möglich ist. Gegenstand der Erfindung sind ein entsprechendes Verfahren und ein zur Durchführung des Verfahrens geeignetes System.

Jeder Mensch kann in eine Notfallsituation geraten oder Zeuge einer solchen Situation werden. In einem solchen Fall, nämlich beim Eintreten einer gesundheitlichen Notfallsituation, bei einem Feuer oder bei einem Überfall auf die eigene oder eine andere Person oder dergleichen ist es zum Erhalt von Hilfe von außerordentlicher Bedeutung, möglichst schnell professionelle Helfer kontaktieren und diesen wichtige Informationen über die eingetretene Situation geben zu können. Mit Blick auf die vorgenannten, für Helfer wichtigen Informationen wird im Zusammenhang mit dem Inhalt, welchen eine Notfallnachricht enthalten sollte, von den sogenannten "5 W-Fragen" gesprochen. Demgemäß ist es wichtig, dass die alarmierten Helfer mit dem Notruf Informationen dazu erhalten, wo etwas geschehen ist, was geschehen ist, wie viele verletzte Personen es gegebenenfalls gibt, welcher Art eventuelle Verletzungen sind und dass, sofern möglich, auf Rückfragen der Helfer mit dem Ziel des Erhalts weiterer Informationen gewartet wird.

Adressaten für einen Notruf sind im Falle des Auftretens der eingangs genannten Notfallsituationen staatlicherseits eingerichtete Einsatzleitstellen, in Deutschland, Österreich, der Schweiz oder in Lichtenstein beziehungsweise im deutschsprachigen Raum die Einsatzleitstellen von Polizei und Feuerwehr. In den einzelnen Ländern existieren für diese Einsatzleitstellen vielfach zentrale Notrufnummern, unter welchen die Einsatzleitstellen vorzugsweise im Wege der Sprachtelefonie, also eines entsprechenden Anrufs, zu kontaktieren sind, wobei ein entsprechender Anruf einer lokal zuständigen Einsatzleitstelle zugeleitet wird. Jedoch sind in anderen Ländern solche zentralen Rufnummern teilweise nicht bekannt oder es findet keine unmittelbare oder nur eine sehr grobe Zuordnung von unter einer zentralen Rufnummer eingehenden Notrufen zu einer lokal zuständigen Einsatzleitstelle statt. Darüber hinaus gibt es Situationen und Umstände, welche es einer sich in einer Notfallsituation befindenden oder Zeuge einer solchen Notfallsituation werdenden Person nahezu oder vollständig unmöglich machen, unter Nutzung einer solchen zentralen Notrufnummer telefonisch Kontakt mit der entsprechenden Einsatzleitstelle aufzunehmen. Dies kann beispielsweise beim Eintreten einer gesundheitlichen Notfallsituation der Fall sein, in welcher eine davon betroffene Person sich am Telefon nicht mehr artikulieren oder gar nicht sprechen kann.

Ferner gibt es auf der ganzen Welt eine sehr große Zahl gesundheitlich beeinträchtigter Personen, welchen es aufgrund ihrer Beeinträchtigung von vornherein überhaupt nicht möglich ist, auf dem beschriebenen telefonischen Weg Hilfe anzufordern. Dies gilt insbesondere für die große Zahl sprach- beziehungsweise sprach- und hörbeeinträchtigter, sehbehinderter oder blinder oder gar taubblinder Menschen. Darüber hinaus können für Menschen Schwierigkeiten einen Notruf auszulösen, um eine Notfallnachricht abzusetzen, oder gar die Unmöglichkeit dessen auch aus Beeinträchtigungen resultieren, die als solches nicht gesundheitlicher Art sind, aber gleichwohl in einem weitergefassten Sinne biologisch oder aber physisch bedingt sind. Im Hinblick auf eine insoweit bestehende biologische Beeinträchtigung ist beispielsweise an einen Säugling zu denken, der aufgrund seines biologischen Entwicklungsstandes noch gar nicht in der Lage dazu ist, selber einen Notruf auszulösen. Dennoch kann es Situationen geben, von denen gesundheitliche Gefahren für den Säugling ausgehen, ohne dass dieser - wäre er denn von seinem biologischen Entwicklungsstand schon dazu in der Lage - aus gesundheitlicher Sicht daran gehindert wäre, einen Notruf auszulösen. Hierzu gehören auch Situationen, die als Anzeichen für das Bestehen der Gefahr eines plötzlichen Kindstodes angesehen werden können, auch wenn sich vielleicht im Nachhinein zeigt, dass eine solche Gefahr nicht wirklich bestand. Vergleichbare biologische Beeinträchtigungen können auch bei alten Menschen gegeben sein, ohne dass diese im eigentlichen Sinne derart krank sind, dass ihnen das Auslösen eines Notrufs und das Absetzen einer Notfallnachricht unmöglich wäre. Die biologische Beeinträchtigung besteht dabei möglicherweise einzig und allein schlechthin in dem Alter eines Menschen.

Was sonstige physische Beeinträchtigungen anbelangt, sei beispielhaft an eine verunfallte Person gedacht, welche eingeklemmt ist und welche aufgrund dessen, dass sie daher ein TEG zur Auslösung eines Notrufs nicht händisch bedienen kann, insoweit vergleichbar einem blinden Menschen gehandicapt ist. Im Zusammenhang mit dem letztgenannten Beispiel ist, sofern das Bestehen der Notsituation vielleicht sogar mittels des TEG oder einer mit ihm gekoppelten Endgeräteeinrichtung eindeutig beziehungsweise objektiv (sensorisch) erkennbar ist, auch an die eingangs bereits erwähnte Möglichkeit eines automatisierten Startens des Generierens der Nachricht für den Notruf zu denken.

Da beispielsweise die Gruppe sprach- und hörbeeinträchtigter Menschen trotz ihrer gesundheitlichen Beeinträchtigung in der Regel ein selbstbestimmtes Leben führt und am normalen gesellschaftlichen Leben teilnimmt, können selbstverständlich auch Personen dieser Personengruppe in ganz unterschiedliche Notfallsituationen geraten. Seitens der staatlichen Institutionen, so auch insbesondere seitens der Einsatzleitstellen, wird Menschen mit einer derartigen Beeinträchtigung empfohlen, sich in einem Notfall per Fax über die auch für die Sprachtelefonie gebräuchlichen Notfallrufnummern beziehungsweise Sonderrufnummern an die Einsatzleitstellen zu wenden. Abgesehen davon, dass dies auch in der eigenen häuslichen Umgebung oder am Arbeitsplatz einer in eine Notfallsituation geratenden Person nicht in jedem Fall ohne weiteres möglich sein dürfte, ist Derartiges außerhalb von Gebäuden, beispielsweise im öffentlichen Raum auf der Straße oder auf Plätzen oder aber in der freien Natur im Grunde überhaupt nicht praktikabel. Hinzu kommt dabei, dass es selbst in dem Fall, dass eine in eine Notfallsituation geratende Person Zugang zu einem Faxgerät hat, doch wenig praktikabel erscheint, wenn die betreffende Person zum Absetzen einer Notfallnachricht zunächst erst selbst eine die wichtigsten Informationen zu der Notfallsituation enthaltende Nachricht verfassen soll, um diese dann per Fax an eine Einsatzleitstelle zu versenden.

An dieser Stelle sei lediglich ergänzend noch angemerkt, dass eine Sprachbeeinträchtigung auch temporär beziehungsweise situationsbedingt auftreten kann. So spricht man beispielsweise im Zusammenhang mit (sprach-) telefonischen Notrufen von Personen mit einer plötzlichen auftretenden Kreislauf- und/oder Herzschwäche oder von schwer verunfallten Personen, welche sich infolge der eingetretenen Situation manchmal sprachlich kaum oder überhaupt nicht artikulieren können, von so genannten "Röchelanrufen". Zudem können auch körperlich nicht beeinträchtigte Menschen unter bestimmten Umständen sprachlich beeinträchtigt sein, beispielsweise wenn sie sich im Ausland, nämlich in einem Land aufhalten, dessen Landessprache sie nicht sprechen. Taubblinde Menschen haben bislang keine technische Möglichkeit einen wirksamen Notruf direkt an hoheitlich bestimmte und lokal zuständige Leitstellen der Polizei und/oder Feuerwehr beziehungsweise von Rettungsdiensten zu übermitteln. Blinde und sehbehinderte Menschen können bislang keine Angaben zum Ort des Notfalls machen.

Durch die DE 20 2013 103 369 ist ein Notrufsystem bekannt geworden, welches zwar gewisse Abhilfe bezüglich der zuvor geschilderten Probleme schafft, aber dennoch nicht frei von Nachteilen ist. Gemäß der in der Druckschrift beschriebenen Lösung für ein Notrufsystem besteht dieses im Wesentlichen aus einem durch eine Person in einer Notfallsituation zum Auslösen eines Notrufs nutzbaren mobilen Endgerät, einem Notfallserver mit Speichermitteln und aus einer ebenfalls durch entsprechende Hardwareeinrichtungen repräsentierten Leitstelle. In diesem Zusammenhang ist aber darauf hinzuweisen, dass es sich bei der letztgenannten Leitstelle nicht um eine staatlich beziehungsweise hoheitlich eingerichtete Einsatzleitstelle handelt. Eine das System nutzende Person legt gemäß der Schrift im Vorfeld einer möglichen Notfallsituation auf dem Notfallserver ein persönliches Profil an. Gegenstand dieses Profils sind neben grundsätzlichen Angaben zur Person, wie Name und dergleichen, Angaben zu bestehenden gesundheitlichen Beeinträchtigungen, welche in den Speichermitteln des Notrufservers hinterlegt werden. Im Falle des Eintritts einer Notfallsituation signalisiert die betroffene Person den Notfall mittels des von ihr mitgeführten mobilen Endgeräts an den Notfallserver, welcher das mit dem Absender des Notrufs verbundene persönliche Profil mit Angaben insbesondere über die bei der Person bestehenden gesundheitlichen Beeinträchtigungen, wie beispielsweise eine Sprach- und/oder eine Hörbeeinträchtigung, aus den Speichermitteln abruft und zusammen mit dem Notruf an die, wohlgemerkt nicht staatliche, das heißt nicht durch die öffentliche Hand unterhaltene beziehungsweise nicht hoheitlich bestimmte Leitstelle weiterleitet. Möglicherweise kann es dabei auch als problematisch angesehen werden, wenn die in der Druckschrift genannte Leitstelle privatwirtschaftlich betrieben wird.

Durch die letztgenannte Leitstelle wird dann ein Kontakt zu der betroffenen, den Notruf absendenden Person aufgenommen, um zunächst abzuklären, ob tatsächlich eine Notfallsituation vorliegt. Dies kann jedoch im Einzelfall wiederum recht schwierig sein, insbesondere bei gesundheitlich beeinträchtigten Menschen wie zum Beispiel gehörlosen/schwerhörigen Menschen, blinden/sehbehinderten Menschen, taubblinden Menschen, Aphasikern, pflegebedürftigen Menschen oder bei Säuglingen sowie bei der jeweiligen Landessprache nicht mächtigen Migranten. Entsprechend einer bekannt gewordenen praktischen Umsetzung des Systems begeben sich dabei im Einzelfall sogar Mitarbeiter der Leitstelle zunächst per Kraftfahrzeug an den Ort des Eintritts der Notfallsituation, um die vorgenannte Prüfung vornehmen zu können. Erst, wenn seitens der Leitstelle, entweder im Wege einer telekommunikativen Rückfrage oder durch unmittelbare persönliche Kontaktaufnahme mit der sich in der Notfallsituation befindenden Person, das Bestehen eines Notfalls bestätigt wird, leitet die genannte Leitstelle Maßnahmen zur Hilfeleistung an die betroffene Person ein, wobei sie hierzu in der Regel die zentrale Notrufnummer der Polizei oder der Feuerwehr kontaktieren wird. Diese Vorgehensweise erfordert jedoch häufig sehr viel Zeit, so dass wertvolle Zeit vergeht, bis einer betroffenen Person tatsächlich geholfen werden kann. Es handelt sich demnach bei dem in der Druckschrift beschriebenen System nicht um ein System der Direkthilfe. Das System erfüllt daher im Grunde eine wesentliche Forderung an ein Notfallsystem nicht, nämlich die Forderung nach einer möglichst kurzen Helferkette.

Sofern zudem im Zusammenhang mit der Kontaktaufnahme zu der den Notruf auslösenden Person versucht werden muss, gegebenenfalls noch fehlende, die eingangs genannten "5W-Fragen" betreffende Angaben einzuholen, kann sich dies, wie bereits angedeutet, zum Beispiel bei einer sprach- und/oder hörbeeinträchtigten Person oder bei einem blinden/sehbeeinträchtigten Menschen sehr schwierig gestalten oder gar unmöglich sein. Somit ist das System auch nicht geeignet, auf einfache Weise sicherzustellen, dass den Einsatzkräften von Polizei und/oder Feuerwehr alle den Notfall betreffenden wichtigen Angaben unmittelbar zur Verfügung stehen.

Im Hinblick auf das vorstehend bereits angesprochene Sprachproblem beziehungsweise auf die Probleme, welche sich für nicht der Landessprache ihres augenblicklichen Aufenthaltsortes kundige Personen bei einem Notfall ergeben können, ist die in der DE 20 2013 103 369 dargestellte Lösung auch nicht beziehungsweise allenfalls bedingt dazu geeignet, einen Nutzer beim Absetzen einer Notfallnachricht unabhängig von seinem augenblicklichen, gegebenenfalls über Ländergrenzen hinweg wechselnden Aufenthaltsort zu unterstützen. Sie ermöglicht es auch nicht, eine gegebenenfalls in einer anderen Sprache erzeugte Notrufnachricht auf kurzem, das heißt möglichst direktem Wege einer für die Behandlung eines Notrufs jeweils hoheitsstaatlich zuständige Leitstelle zuzuführen.

Letzteres, nämlich die Eignung zur Nutzung in einer Vielzahl von Ländern ohne konfigurierenden Eingriff des Nutzers an seinem jeweiligen Aufenthaltsort, war auch nicht bei einer durch die Anmelderin früher entwickelten Lösung der Fall, deren frühere Veröffentlichung im Internet noch in einem Webarchiv unter http://web.archive.org/web/20140721044610/*http*://vww.app-sec.de/sites/default/fil*es*/manual*s*/handhelp_handout_de_1.0.pdf zugänglich ist.

Durch die EP 1 189 470 A2 wird zwar insoweit eine Lösung offenbart, welche das Sprachproblem dadurch löst, dass eine Notfallnachricht zunächst einem im Rahmen der in der Druckschrift vorgestellten Lösung vorgesehenen Backendsystem zugeleitet wird. Jedoch offenbart es auch diese Lösung nicht, einer jeweils zuständigen hoheitsstaatlichen Leitstelle umfangreiche Informationen zuzuleiten, welche den Einsatzkräften beispielsweise durch akustische und optische Eindrücke aus der Umgebung einer sich in einer Notsituation befindenden Person eine unmittelbare Antwort auf die eingangs genannten "5 W-Fragen" geben.

Aufgabe der Erfindung ist es, die vorgenannten Nachteile zu vermeiden. Hierzu ist eine Lösung bereitzustellen, welche eine weitgehend automatisierte, barrierefreie Erzeugung und Übermittlung einer Notfallnachricht im In- und Ausland und damit unabhängig vom augenblicklichen Aufenthaltsort der gegebenenfalls aktiv Hilfe suchenden oder sich unabhängig hiervon in einer Notsituation befindenden Person ermöglicht. Dabei sollen professionelle Helfer auf kürzestem Wege benachrichtigt und mit den wichtigsten, zur Einleitung wirkungsvoller Hilfemaßnahmen erforderlichen Informationen versorgt werden. Für eine solche Lösung sind ein Verfahren und ein zur Durchführung des Verfahrens geeignetes System anzugeben.

Die Aufgabe wird durch ein Verfahren mit den Merkmalen des Patentanspruchs 1 gelöst. Ein die Aufgabe lösendes, zur Durchführung des Verfahrens geeignetes System ist durch den ersten Sachanspruch charakterisiert. Vorteilhafte Aus- und Weiterbildungen der Erfindung sind durch die jeweiligen Unteransprüche gegeben.

Das erfindungsgemäße Verfahren betrifft das automatisierte, barrierefreie Absetzen einer Notfallnachricht bei der Auslösung eines Notrufs mittels eines zumindest mit einer Steuereinheit und einem Funktransceiver ausgestatteten mobilen Telekommunikationsendgeräts - im Weiteren vereinfachend TEG genannt - oder einer mit einem solchen TEG gekoppelten Endgeräteeinrichtung. Bei der letztgenannten Endgeräteeinrichtung kann es sich um ein einzelnes Endgerät, wie ein separates berührungsempfindliches Display oder um eine gemäß einer bevorzugten Weiterbildung des später noch zu beschreibenden Systems beispielsweise über Bluetooth mit dem TEG gekoppelte Uhr (Smart Watch) oder aber auch um eine Gruppe von Endgeräten handeln. Beispielhaft für derartige Endgeräte seien dabei ferner noch Pulsarmbänder oder Fitnessarmbänder mit Puls- und/oder Blutdruckmessfunktion, Sticks gegebenenfalls mit Braillestiften oder sonstige vom TEG abgesetzte Notrufknöpfe genannt. Im Weiteren soll - unabhängig davon, ob es sich um eine einzelne Einrichtung oder um eine Gruppe von Einrichtungen handelt - verallgemeinernd und sprachlich vereinfachend von einer gegebenenfalls mit dem TEG gekoppelten Endgeräteeinrichtung gesprochen werden. Unabhängig von der Art dieser Endgeräteeinrichtung erfolgt dabei die Kopplung mit dem TEG vorzugsweise unter Nutzung einer Funktechnik, wie der bereits angesprochenen Bluetooth-Technik.

Bei dem TEG selbst handelt es sich vorzugsweise um ein Mobilfunkgerät, nämlich insbesondere um ein Smartphone oder um einen in ein Mobilfunknetz oder in ein WLAN eingebundenen oder über einen Zugriff auf einen Hotspot verfügenden Tablet-PC, gegebenenfalls aber auch um ein anderes mit einer SIM-Karte für den Mobilfunk und einer Steuer- beziehungsweise Verarbeitungseinheit ausgestattetes elektronisches Gerät (Smartwatch, Augmented-Reality-Brille oder dergleichen). Im Falle der Einbindung in ein WLAN oder der Anbindung an einen Hotspot ist mit derartigen Geräten das Absetzen einer Notfallnachricht sogar ohne SIM-Karte möglich. Unabhängig davon, welcher Gerätekategorie das TEG tatsächlich zuzurechnen ist, verfügt dieses aber jedenfalls, wie bereits ausgeführt, über eine Steuereinheit und über eine für die funkbasierte Datenübertragung ausgebildete Sende- und Empfangseinheit, also einen Funktransceiver, nämlich vorzugsweise einen Funktransceiver zur Nutzung eines Mobilfunknetzes. Darüber hinaus weist ein solches TEG Bedienelemente sowie Ein- und Ausgabemittel auf, welche aber, da sie selbstverständliche Elemente eines solchen Gerätes sind, in den Ansprüchen und in den nachfolgenden Erläuterungen in der Regel nicht explizit genannt werden und auch nicht Gegenstand detaillierterer Ausführungen sein sollen.

Ein Notruf wird nach dem vorgeschlagenen Verfahren aufgrund einer durch eine Person beziehungsweise durch einen Nutzer an dem TEG selbst oder an einer mit diesem gekoppelten Endgeräteeinrichtung vorgenommenen Bedienhandlung oder aufgrund eines Sensorsignals ausgelöst. Dabei kann die genannte Bedienhandlung die Nutzung aller gängigen Eingabemethoden und Eingabemittel in der Kommunikation zwischen Mensch und Maschine beziehungsweise Nutzer und Gerät umfassen. Demnach kommt insbesondere die Betätigung realer, das heißt mechanischer oder elektronischer Tasten, oder aber auch virtueller Tasten auf einem berührungsempfindlichen Display (Touchscreen) in Betracht. Darüber hinaus kann die Bedienhandlung gegebenenfalls aber auch durch eine Gestensteuerung erfolgen. Zur Berücksichtigung der Bedürfnisse sehbeeinträchtigter Menschen kann die Bedienhandlung auch durch ein oder mehrere Sprachkommandos erfolgen sowie über in das TEG integrierte Anwendungen von Sprachausgaben wie beispielsweise über TalkBack, VoiceOver, Narrator, Screenreader. Vorzugsweise ist dabei die Programmanwendung so ausgelegt, dass sie durch den Nutzer diesbezüglich konfigurierbar ist, der Nutzer also die Art der zur Auslösung des Notrufs führenden Bedienhandlung durch die Auswahl einer von mehreren hierfür angebotenen Optionen selbst festlegen kann.

Was die Auslösung des Notrufs durch ein Sensorsignal anbelangt, so kommen für die Verfahrensgestaltung, aber insbesondere auch hinsichtlich der Gestaltung des ansonsten später noch genauer zu erläuternden Systems vielfältige Möglichkeiten in Betracht. Zunächst kann ein entsprechender Sensor, bei dem es sich um einen Sensor zur Erfassung physikalischer Größen, wie zum Beispiel Beschleunigung/(abrupte) Verzögerung (beispielsweise durch einen Aufprall), oder medizinischer Daten, wie zum Beispiel Pulsfrequenz, Herzfrequenz, Blutdruck oder bestimmter Blutwerte, handeln kann, in dem TEG selbst angeordnet sein oder aber auch in einer mit diesem gekoppelten Endgeräteeinrichtung. Sofern mehrere Sensoren vorgesehen beziehungsweise in das erfindungsgemäße Verfahren einbezogen werden, können diese außerdem auch verteilt in dem TEG und in/an einer gegebenenfalls mit dem TEG gekoppelten Endgeräteeinrichtung angeordnet sein. Hierbei kann ein solcher Sensor oder können mehrere Sensoren erfasste Daten in festgelegten zeitlichen Abständen an die bereits genannte (sich nach ihrem Start, aber vor dem Absetzen einer eventuellen Notfallnachricht in einer Art Standby-Modus befindende) Programmanwendung übermitteln, welche dann im Falle dessen, dass ein für die entsprechenden Daten jeweils festgelegter Schwellwert unter- oder überschritten wird, selbsttätig, das heißt automatisiert die Generierung der Nachricht für den Notruf startet. Denkbar ist es aber auch, dass entsprechende sensorische Einheiten beziehungsweise eine gegebenenfalls mit einer solchen sensorischen Einheit ausgestattete und mit dem TEG gekoppelte Endgeräteeinrichtung erfasste Daten selbst auswertet und im Falle eines Überschreitens/Unterschreitens eines entsprechenden Schwellwertes ein die automatisierte Generierung der Notfallnachricht startendes Triggersignal an die Programmanwendung übergibt. Im letztgenannten Fall umfasst die Endgeräteeinrichtung beziehungsweise ihre sensorische Einheit auch eine Steuereinheit oder dergleichen.

Aufgrund der vorgenannten Bedienhandlung zur Auslösung des Notrufs oder eines dies initiierenden Sensorsignals wird durch eine von der Steuereinheit des TEG oder von der Steuereinheit einer mit dem TEG gegebenenfalls gekoppelten Endgeräteeinrichtung verarbeitete Programmanwendung eine Notfallnachricht erzeugt und mittels des schon angesprochenen Funktransceivers über ein funkgestütztes Telekommunikationsnetz an Backendeinrichtungen des noch zu beschreibenden Notrufsystems ausgesendet. Soweit vorstehend und in den Patentansprüchen davon gesprochen wird, dass die Programmanwendung, welche die Notfallnachricht erzeugt und ihre Aussendung veranlasst, durch eine Steuereinheit des TEG oder einer mit ihm gekoppelten Endgeräteeinrichtung verarbeitet wird, bezieht dies die Möglichkeit ein, dass es sich bei besagter Endgeräteeinrichtung selbst um eines oder mehrere intelligente Endgeräte, wie die schon beispielsweise erwähnte Smart Watch, handelt. Bevorzugt ist es jedoch, dass die besagte Programmanwendung, nämlich eine im Weiteren synonym auch als App beziehungsweise Notruf-App bezeichnete Miniprogrammanwendung, durch das TEG, wie beispielsweise ein Smartphone, selbst ausgeführt wird. Dies ist jedoch letztlich nur eine Frage der Beschaffenheit und Konfiguration der nutzerseitigen Hardware.

Bei der von der Programmanwendung beziehungsweise von der Notruf-App erzeugten Notfallnachricht handelt es sich um eine Textnachricht, welche zunächst einmal in jedem Falle Absenderangaben und, ohne dass an dieser Stelle dazu nähere Angaben erfolgen sollen, weitere Textdaten zu der den Nutzer des TEG zur Auslösung des Notrufs veranlassenden Notrufsituation enthält. Das erfindungsgemäße Verfahren zeichnet sich aber ferner dadurch aus, dass als Teil dieser Notfallnachricht zusätzlich zu den vorgenannten Absenderangaben und Textdaten Aufzeichnungsdaten mit einer festgelegten Mindestdauer an die ebenfalls bereits genannten Backendeinrichtungen übermittelt werden, welche aus einer durch die Notruf-App gestarteten Aufzeichnung der mittels eines Mikrofons und einer Kamera des TEG oder einer mit diesem gekoppelten Endgeräteeinrichtung erfassten Umgebung des TEG beziehungsweise seines Nutzers resultieren. Dabei wird die Übertragung der Notfallnachricht an die Backendeinrichtung erforderlichenfalls um einige Sekunden verzögert, um die für die akustische und visuelle (Folge von Einzelbildern oder Videosequenz) Erfassung der Umgebung des TEG festgelegte Mindestaufzeichnungsdauer zu gewährleisten. Als sinnvoll erscheint insoweit eine Aufzeichnungsdauer von 15 bis 20 Sekunden.

Die Backendeinrichtungen übermitteln schließlich die um Klartextangaben zum Aufenthaltsort des Absenders der Notfallnachricht ergänzten und in die Landessprache des dem Aufenthaltsort entsprechenden Aufenthaltslandes übersetzten textlichen Teile der Notfallnachricht zusammen mit den Aufzeichnungsdaten oder zusammen mit einem Link zu den Aufzeichnungsdaten an mindestens eine hoheitlich bestimmte, lokal zuständige Einsatzleitstelle. Die Übertragung der Notfallnachricht (inklusive der Aufzeichnungsdaten oder des Links zu den Aufzeichnungsdaten) von den Backendeinrichtungen an die Einsatzleitstelle erfolgt dabei unter Nutzung eines zur Kontaktierung dieser Einsatzleitstelle zugelassenen Übertragungsverfahrens.

Entsprechend einer praxisgerechten Verfahrensgestaltung vollzieht sich der Ablauf des vorstehend grundsätzlich beschriebenen Verfahrens wie folgt. Durch die aufgrund der Bedienhandlung oder durch ein Sensorsignal zur Auslösung des Notrufs verarbeitete Programmanwendung werden das mindestens eine Mikrofon und die mindestens eine Kamera zur Aufzeichnung der Umgebung des TEG gestartet und deren Aufzeichnungsdaten als Teil der Notfallnachricht zusammen mit den Absenderangaben und Textdaten an die Backendeinrichtungen übertragen. In den Backendeinrichtungen werden dann anhand der von dem TEG mit der Notfallnachricht empfangenen Absenderangaben, wie insbesondere einer Mobilfunknummer und Information zu der Funkzelle eines Mobilfunknetzes, in welches das TEG mit dieser Mobilfunknummer eingebucht ist oder Lokalisierungsdaten eines WLAN Netzes oder eines Positionsbestimmungssystems, wie zum Beispiel GPS, Galileo, Glonass, der Aufenthaltsort des Absenders der Notfallnachricht ermittelt und die Textdaten der eingegangenen Notfallnachricht um Klartextangaben zu dem ermittelten Aufenthaltsort ergänzt. Danach werden die Textdaten der Notfallnachricht in den Backendeinrichtungen auf der Basis des ermittelten Aufenthaltsortes in die Landessprache des insoweit bekannten Aufenthaltslandes der die Notfallnachricht absendenden Person übersetzt. Die bezüglich ihrer Textdaten übersetzte und durch die Aufzeichnungsdaten oder zumindest um einen Link zu den Aufzeichnungsdaten ergänzte Notfallnachricht wird schließlich durch die Backendeinrichtungen unmittelbar an eine hoheitlich bestimmte, lokal zuständige Einsatzleitstelle (also nicht an eine Leitstelle irgend eines privaten Hilfsdienstes) übermittelt. Im Falle dessen, dass die an die Einsatzleitstelle übermittelten Textdaten nicht durch die Aufzeichnungsdaten, sondern um einen Link zu den Aufzeichnungsdaten ergänzt werden, werden die über diesen Link für das Personal beziehungsweise einen Disponenten der Einsatzleitstelle zugänglichen Aufzeichnungsdaten vorzugsweise auf einem Server der Backendeinrichtungen gehalten.

Nun ist es jedoch so, dass eine hoheitlich bestimmte Einsatzleitstelle, wie in Deutschland die Polizei oder die Feuerwehr, nicht auf beliebigem Wege kontaktiert werden kann. Vielmehr sind beispielsweise in Deutschland Polizei oder Feuerwehr mit einem Notruf nur über das Telefon oder mittels Telefax erreichbar, wobei dies jedoch zumindest in vorteilhafter Weise über eine zentrale Notrufnummer, nämlich die "110" im Falle der Polizei und die "112" im Falle der Feuerwehr, ermöglicht ist. Auch in anderen Ländern ist das Absetzen einer Notfallnachricht in der Regel an die Benutzung bestimmter Übertragungswege gebunden, wobei in manchen Ländern das Fehlen einer zentralen Notrufnummer erschwerend hinzukommt.

Gemäß der Erfindung ist es daher vorgesehen, dass die Backendeinrichtungen den Notruf an die lokal zuständige Einsatzleitstelle unter Verwendung einer in dem aufgrund der Absenderdaten bekannten Aufenthaltsland dafür vorgesehenen Telekommunikationsadresse und eines zugelassenen Übertragungsverfahrens übermitteln. Die besagte Telekommunikationsadresse und das zugelassene Übertragungsverfahren werden dabei durch die Backendeinrichtungen aus einer zu den Backendeinrichtungen gehörenden Datenbank entnommen.

Die Erfindung zeichnet sich demnach insbesondere dadurch aus, dass sie es einer in Not geratenen oder Zeuge einer solchen Notsituation werdenden Person unabhängig von ihrem augenblicklichen Aufenthaltsort, das heißt auch unabhängig vom augenblicklichen Aufenthaltsland ermöglicht, durch eine (einfache) Bedienhandlung, wie das Drücken einer oder einiger weniger Tasten an einem Telekommunikationsendgerät, automatisiert mit einem stillen Notruf eine Notfallnachricht abzusetzen, welche wesentliche Angaben zur Notfallsituation enthält und einer hoheitlich bestimmten, also in der Regel staatlichen, regional zuständigen Einsatzleitstelle unmittelbar zugeleitet wird und dort auch im Hinblick auf Absenderangaben und Angaben zur Notrufsituation unabhängig von der Sprache des Absendenden einerseits und von der Landessprache des aktuellen Aufenthaltsortes andererseits verstanden wird. Aber insbesondere auch körperlich oder seelisch beziehungsweise gesundheitlich beeinträchtige Menschen, nämlich sprach- oder sprach- und hörbeeinträchtigte, aber auch sehbeeinträchtigte, blinde oder gar taubblinde Menschen sowie ältere beziehungsweise kranke oder pflegebedürftige Menschen, aber auch Menschen ab dem Säuglingsalter, werden durch sie in die Lage versetzt, durch Vornahme einer einfachen Bedienhandlung beziehungsweise einer vollautomatisierten Handlung oder aufgrund eines sensorisch erkannten Unter-/Überschreitens von Schwellenwerten für gesundheitlich relevante medizinische Daten, beispielsweise von Puls-/Herz-Frequenzen (gegebenenfalls mit Überprüfung des Sauerstoffgehalts des Blutes) einen Notruf auszulösen und eine Notfallnachricht abzusetzen, mit welcher den Helfern wichtige Daten zur Notfallsituation unmittelbar übermittelt werden, so dass auch die Forderung nach einer kurzen Helferkette in hervorragender Weise erfüllt wird. Durch die der Notfallnachricht direkt oder in Form eines Links angefügten akustischen und visuellen Aufzeichnungsdaten aus der Umgebung der den Notruf auslösenden Person beziehungsweise ihres TEG ergibt sich für einen Disponenten in der Einsatzleitstelle zudem in der Regel ein umfassenderer Eindruck von der eingetretenen Notfallsituation.

Vorzugsweise ist das Verfahren darüber hinaus so ausgestaltet, dass falsche oder gefälschte Notrufe, nämlich Notrufe, bei denen eine sie auslösende Person versucht, den Absender zu verschleiern oder einen anderen Absender vorzutäuschen, weitgehend ausgeschlossen werden. Dies wird dadurch erreicht, dass die Programmanwendung beziehungsweise Notruf-App gemäß einer entsprechenden vorteilhaften Weiterbildung des Verfahrens vor ihrem ersten Einsatz zum Zweck der Erzeugung und Aussendung einer Notfallnachricht das Durchlaufen einer Aktivierungsprozedur erfordert. Dabei wird von der Programmanwendung nach ihrem Start aufgrund eines seitens des Nutzers durch eine entsprechende Bedienhandlung an dem TEG oder an einer mit dem TEG gekoppelten Endgeräteeinrichtung gegebenen Einverständnisses eine Kurznachricht an die Backendeinrichtungen übertragen, welche eine Absenderadresse des TEG enthält, das heißt, es wird beispielsweise im Falle einer Ausbildung des TEG in Form eines Handys beziehungsweise Smartphones, eines Tablett-PCs mit GSM-Modul beziehungsweise einer Smart Watch oder eines Fitnessarmbandes mit SIM-Karte dessen/deren Mobilfunknummer an die Backendeinrichtungen übertragen.

Sofern der Nutzer des TEG die Übertragung dieser Absenderadresse - beispielsweise beim Smartphone durch Aktivieren der Option zur Unterdrückung einer Übertragung seiner Rufnummer an einen angerufenen Teilnehmer - verhindert, schlägt die Aktivierung fehl. Andernfalls wird die Absenderadresse verifiziert und deren Erhalt und Richtigkeit von den Backendeinrichtungen durch Übertragung einer Antwortnachricht an das TEG quittiert. Durch die Verarbeitung in dieser Antwortnachricht enthaltener Daten seitens der Programmanwendung wird diese für den eigentlichen Gebrauch des automatisierten Absetzens von Notfallnachrichten beim Auslösen von Notrufen freigeschaltet, wobei die von den Backendeinrichtungen zurückgesendete Absenderadresse des TEG in einem empfängerseitig, das heißt in dem TEG oder in einer mit diesem gekoppelten Endgeräteeinrichtung ausgebildeten, manipulationssicheren Speicher abgelegt wird. Aus diesem Speicher wird die betreffende Absenderadresse, also vorzugsweise die Mobilfunknummer des TEG, im Zusammenhang mit jedem s automatisierten Absetzen einer Notfallnachricht ausgelesen und als Teil der Notfallnachricht mit an die Backendeinrichtungen übertragen und von diesen direkt an die (hoheitlich bestimmte) Einsatzleitstelle weitergegeben. Hierdurch ist die Programmanwendung mit dem TEG über diese Absenderadresse assoziiert.

Im Falle einer sich auf die Absenderadresse des TEG auswirkenden Änderung der Hardware, also beispielsweise im Falle des Austauschs einer SIM-Karte bei einem Smartphone, oder aber im Fall der Neuinstallation der Programmanwendung auf einem anderen TEG ist dabei eine erneute Aktivierung der Programmanwendung erforderlich. Vorzugsweise wird zur Aktvierung der Programmanwendung an die Backendeinrichtungen eine Kurznachricht in Form einer SMS übertragen. Sofern die Übertragung der Mobilfunknummer durch den Nutzer nicht unterdrückt wurde, wird dabei automatisch auch die Mobilfunknummer des Absenders der entsprechenden SMS, also die Mobilfunknummer des TEG, an die Backendeinrichtungen übertragen. Diese wird durch die Backendeinrichtungen unter Einbeziehung von Einrichtungen des Mobilfunkbetreibers, durch den die Nutzung des Mobilfunknetzes mittels dieser Nummer ermöglicht wird, dahingehend verifiziert, dass überprüft wird, ob sie mit der in jedem Falle mit übertragenen IMEI (International Mobile Equipment Identity) des TEG korrespondiert. Nur in diesem Falle gilt die per SMS übermittelte Mobilfunknummer als authentisch, was dann zur gewünschten Aktivierung der Programmanwendung führt. Wie bereits ausgeführt, scheitert die Aktivierung, wenn der Nutzer die Übertragung der Mobilfunknummer unterdrückt hat, da dann deren Verifizierung in der zuvor beschriebenen Weise nicht möglich ist.

Das erfindungsgemäße Verfahren kann ferner dadurch vorteilhaft weitergebildet sein, dass der von den Backendeinrichtungen empfangenen Notfallnachricht zusätzliche Angaben zu dem mit dem TEG assoziierten Nutzer hinzugefügt werden, welche in Form eines Nutzerprofils in einer Datenbank der Backendeinrichtungen gehalten werden. Die entsprechenden Angaben zum Nutzer werden von diesen in einem Konfigurationsmodus der Programmanwendung, vorzugsweise menügeführt, abgefragt und an die Backendeinrichtungen übertragen. Vorzugsweise ist die Programmanwendung dabei derart ausgebildet, dass dieser Konfigurationsmodus zur Einrichtung der Programmanwendung einmalig zwingend durchlaufen werden muss. Selbstverständlich ist es dem Nutzer möglich, diese Angaben später zu ergänzen oder zu ändern, indem er die Programmanwendung erneut im Konfigurationsmodus startet. Bei den vorgenannten, in Form des Nutzerprofils gespeicherten Daten handelt es sich um grundsätzliche Angaben zur Person, wie Name, Geschlecht, Geburtsdatum, Adresse, Staatsangehörigkeit und gegebenenfalls Anrede und E-Mail-Adresse sowie darüber hinaus um andere persönliche, vorzugsweise aber insbesondere um medizinische Angaben, wie beispielsweise die Blutgruppe des Nutzers und eventuell bestehende gesundheitliche Beeinträchtigungen. Darüber hinaus kann es vorgesehen sein, dass der Nutzer noch weitere, zusätzliche beziehungsweise stärker ins Detail gehende Angaben zu seiner Person machen kann. Zu denken ist hier beispielsweise an Angaben dazu, in welcher Etage der Nutzer in einem Wohnhaus lebt oder in einem Firmengebäude arbeitet oder in welchem Urlaubsort beziehungsweise Hotel er sich aufhält. Insbesondere auch im Zusammenhang mit dem nachfolgend noch angesprochenen Tracking ist hierdurch in einem Notfall unter Umständen eine noch viel genauere Lokalisierung des Nutzers, das heißt der von diesem Notfall betroffenen Person möglich. Die vorzugsweise zwingend durch den Nutzer vor der ersten Verwendung der Programmanwendung zum Zwecke des Absetzens einer Notfallnachricht vorzunehmende Konfiguration der Programmanwendung kann dabei so gestaltet sein, dass die vorstehend genannten grundsätzlichen Angaben zur Person zwingend zu machen sind und es darüber hinaus, im Interesse des Datenschutzes, dem Nutzer überlassen ist, welche weiteren Angaben er zu seiner Person, zu seinen persönlichen Verhältnissen und zu eventuell bestehenden körperlichen Beeinträchtigungen für den Zugriff durch die Programmanwendung beziehungsweise durch das Notrufsystem hinterlegt. Aus der Sicht des Nutzers gilt es hierbei sicherlich zu bedenken, dass letztlich jede dieser Angaben die Tätigkeit der Helfer erleichtert und/oder die Effektivität eingeleiteter Hilfsmaßnahmen - und sei es nur durch ein sehr schnelles Auffinden der von einem Notfall betroffenen Person(en) - erhöhen kann.

Die bereits angesprochene Bedienhandlung zur Auslösung des Notrufs umfasst, unabhängig davon, ob diese mittels realer oder virtueller Tasten, gestengesteuert, durch Spracheingabe (beziehungsweise Sprachausgabe - wie bereits genannt, TalkBack, VoiceOver, Narrator, Screenreader) oder in sonstiger Weise vorzunehmen ist, entsprechend einer praxisgerechten Umsetzung des erfindungsgemäßen Verfahrens mehrere Bedienschritte. Wie später noch anhand des Ausführungsbeispiels gezeigt werden soll, dienen diese mehreren Bedienschritte dazu, Angaben zur Art des Notfalls, zu der oder den betroffenen Personen sowie zu deren Anzahl beim Nutzer abzufragen und diese Angaben der Notfallnachricht bei ihrer Erzeugung als Klartextangabe hinzuzufügen.

Die als ein wesentlicher Bestandteil des erfindungsgemäßen Verfahrens anzusehende Aufzeichnung der akustischen und visuellen beziehungsweise optischen Daten aus der Umgebung des TEG kann im Falle dessen, dass die Bedienhandlung zur Auslösung des Notrufs - wie vorzugsweise vorgesehen - mehrere Bedienschritte umfasst, mit der Ausführung des letzten dieser Bedienschritte, vorzugsweise aber bereits mit der Ausführung des ersten beziehungsweise eines der ersten Bedienschritte gestartet werden. Was die festzulegende Mindestdauer der Aufzeichnung von vorzugsweise 15 bis 20 Sekunden anbelangt, so kann diese Mindestdauer direkt, beispielsweise durch eine Verzögerung der Aussendung der Notfallnachricht bis zum Ablauf eines mit der Aufzeichnung gestarteten Countdowns oder aber auch indirekt gewährleistet werden, indem die Aussendung der Notfallnachricht verzögert wird, bis ein für die Aufzeichnungsdaten reservierter Speicherbereich gefüllt ist.

Entsprechend einer bevorzugten Verfahrensgestaltung, bei welcher die zur Auslösung des Notrufs vorzunehmende Bedienhandlung mehrere Bedienschritte umfasst, ist es vorgesehen, dass im Zusammenhang mit der Erledigung des letzten dieser Bedienschritte die Aussendung der Notfallnachricht durch das TEG erfolgt, jedoch zeitverzögert. Die zeitverzögerte Aussendung der Notfallnachricht erfolgt aber auch dabei in jedem Falle erst dann, wenn die Mindestdauer für die Aufzeichnung der akustisch und visuell beziehungsweise optisch erfassten Umgebung des TEG abgelaufen ist. Die Aufzeichnung wird jedoch, entsprechend der an dieser Stelle erläuterten vorteilhaften Verfahrensgestaltung, unabhängig davon um einige Sekunden verzögert, um es dem Nutzer zu ermöglichen, die Aussendung der Notfallnachricht eventuell noch zu verhindern und somit eine (eventuell versehentlich angestoßene) Auslösung des Notrufs zu annullieren. Die hierzu erforderliche Verzögerung kann durch den Start eines Countdowns nach der Ausführung des letzten Bedienschritts realisiert werden. In diesem Zusammenhang kann der Nutzer auf die bestehende Möglichkeit eines Abbruchs des Notrufs beispielsweise auch durch ein Vibrationssignal des TEG oder dergleichen hingewiesen werden.

Gemäß einer anderen vorgesehenen vorteilhaften Weiterbildung des Verfahrens wird mit der Auslösung eines Notrufs ein Tracking des Nutzers beziehungsweise des von ihm verwendeten TEG gestartet. Dabei werden in definierten zeitlichen Abständen Bewegungsdaten des TEG an die Backendeinrichtungen übermittelt, welche es ermöglichen, Bewegungen des TEG und somit in der Regel auch des Nutzers nach dem Auslösen des Notrufs nachzuvollziehen und zu jedem Zeitpunkt sehr genau seinen aktuellen Aufenthaltsort zu bestimmen. Hinsichtlich der Einbeziehung von Trackingdaten kann das Verfahren darüber hinaus so gestaltet sein, dass die Programmanwendung (Notruf-App) unabhängig vom Eintreten eines Notfalls dauerhaft in einem Trackingmodus betrieben wird, in welchem seine Bewegungsdaten über längere Zeiträume aufgezeichnet werden. In diesem Fall werden erstmals bereits mit dem Absetzen der Notfallnachricht entsprechende Bewegungsdaten an die Backendeinrichtungen übertragen.

In weiterer vorteilhafter Ausgestaltung des Verfahrens kann es vorgesehen sein, dass der an die Backendeinrichtungen auszusendenden Notfallnachricht eine Textinformation über den augenblicklichen Ladezustand des Akkumulators des TEG hinzugefügt wird, welche zusammen mit der Notfallnachricht an die Backendeinrichtungen und von diesen an die Einsatzleitstelle weitergeleitet wird. Zum einen ist es hierdurch möglich, festzustellen, ob nach dem Auslösen eines Notrufs eine eventuelle Kontaktaufnahme mit dem TEG des Nutzers möglich oder aufgrund eines sehr niedrigen Akkuladezustands nicht sinnvoll ist. Zum anderen dient dies aber auch dazu, im Nachhinein Aussagen über die Funktionsfähigkeit des TEG und der Notruf-App treffen zu können.

An dieser Stelle sei darauf hingewiesen, dass die Erfindung hinsichtlich der Unteransprüche, welche sich auf die der Notfallnachricht gegebenenfalls beigefügten Angaben beziehen, nicht auf die durch diese Unteransprüche und deren Rückbezüge gegebenen Ausbildungsformen beschränkt ist. Vielmehr handelt es sich hierbei um besonders vorteilhafte Ausgestaltungen. Jedoch können den Textdaten der Notfallnachricht einzelne oder beliebige Kombinationen der in diesen Ansprüchen genannten Angaben hinzugefügt werden, ohne dass hierdurch der Rahmen der Erfindung verlassen würde.

Entsprechend einer weiteren vorteilhaften beziehungsweise praxisgerechten Verfahrensgestaltung ist es dem Nutzer eines mit der Notruf-App ausgestatteten TEG im Zuge des bereits angesprochenen Konfigurationsmodus möglich, festzulegen, dass im Fall der Auslösung eines Notrufs zusätzlich zu der an die Backendeinrichtungen übermittelten Notfallnachricht eine Informationsnachricht über das Vorliegen eines Notfalls an durch den Nutzer anzugebende Personen übermittelt wird. Hierzu gibt der Nutzer im Konfigurationsmodus an, welche Personen unter Nutzung welches Kommunikationsweges über welche Empfängeradresse eine solche Informationsnachricht erhalten sollen. Er kann hierbei beispielsweise auswählen, ob einer solchen Person eine entsprechende E-Mail-Nachricht und/oder eine SMS zugestellt werden soll. Darüber hinaus kann es vorgesehen sein, dass die Backendeinrichtungen die Notfallnachricht nicht nur an eine Einsatzleitstelle, sondern zusätzlich an eine Botschaft, an eine konsularische Einrichtung oder dergleichen übertragen, sofern sich der Nutzer mit dem TEG im Ausland befindet. Zu den dafür zu verwendenden Telekommunikationsdaten und Übertragungswegen (beziehungsweise Übertragungsverfahren) sind selbstverständlich entsprechende Daten ebenfalls in der schon erwähnten Datenbank (der Backendeinrichtungen) mit den Telekommunikationsadressen (zum Beispiel Rufnummern) der Einsatzleitstellen gespeichert.

In weiterer, besonders vorteilhafter Ausgestaltung des erfindungsgemäßen Verfahrens kann es vorgesehen sein, dass im Falle dessen, dass beim Auslösen eines Notrufs keine Verbindung zu den Backendeinrichtungen besteht, automatisiert auf einem Display, vorzugsweise einem virtuelle Tasten visualisierenden berührungsempfindlichen Display, des TEG und/oder einer mit diesen gekoppelten Endgeräteeinrichtung die für das augenblickliche Aufenthaltsland des TEG geltende zentrale Notrufnummer angezeigt wird. Bekanntlich ist es so, dass die Mobilfunkprovider in dem Fall, dass eine Person unter Anwahl einer zentralen Notrufnummer einen Notfallnachricht absetzen möchte, aber augenblicklich keine Verbindung in das Netz ihres Providers hat, verpflichtet sind, dieser Person einen Verbindungsaufbau zu der zentralen Notrufnummer über ein anderes Betreibernetz zu ermöglichen. Dies setzt allerdings voraus, dass die betreffende Person die zentrale Notrufnummer kennt, was insbesondere im Fall eines Auslandsaufenthalts nicht immer gegeben ist. Ein in ein beliebiges Mobilfunknetz eingebuchtes TEG "weiß" jedoch aufgrund des Austausches von Steuerdaten mit Basisstationen der Netzbetreiber anhand von Netz- beziehungsweise Zellinformationen, in welchem Land es gerade betrieben wird. Gemäß der angesprochene Weiterbildung der Erfindung ist es nun vorgesehen, dass diese Information durch die Notruf-App genutzt wird und aus einem im lokalen Zugriff der App stehenden Speicher, also einem Speicher des TEG oder einer mit diesem gekoppelten Endgeräteeinrichtung, die zentrale Notrufnummer für das aktuelle Aufenthaltsland ausliest und dem Nutzer über das Display zur Kenntnis gibt.

Vorzugsweise kann das bis hierher in seinen Ausgestaltungsvarianten beschriebene Verfahren zudem noch derart gestaltet sein, dass alle Bedienschritte und Bedienhandlungen im Zusammenhang mit der Nutzung der erfindungsgemäßen Programmanwendung (Notruf-App) in einem Speicher des TEG oder einer mit ihm verbundenen Endgeräteeinrichtung protokolliert werden.

Ein die Aufgabe lösendes und zur Durchführung des Verfahrens ausgebildetes System für das automatisierte Absetzen einer Notfallnachricht bei der Auslösung eines Notrufs besteht zumindest aus dem das Absetzen der Notfallnachricht ermöglichenden TEG, welches neben den selbstverständlichen (und daher in den Patentansprüchen nicht explizit erwähnten) Bedienelementen sowie Ein- und Ausgabemitteln, wie einem Display und einem Mikrofon, eine Steuereinheit und einen Funktransceiver aufweist und gewissermaßen das Frontend ausbildet und aus den Backendeinrichtungen, welche die gemäß dem Verfahren von dem TEG ausgesendete Notfallnachricht empfangen, verarbeiten und an eine Einsatzleitstelle weiterleiten. Die Backendeinrichtungen und das TEG sind über ein Netzwerk miteinander verbunden.

Das TEG, welches mittels des genannten Funktransceivers vorzugsweise in ein Mobilfunknetz eingebunden ist oder eine mit diesem TEG gekoppelte, ebenfalls eine Steuereinheit aufweisende Endgeräteeinrichtung sind mit einer von ihrer Steuereinheit verarbeitbaren Programmanwendung ausgestattet, wobei die Verarbeitung der Programmanwendung vorzugsweise durch die Steuereinheit des TEG erfolgt. Diese Programmanwendung ist derart ausgebildet, dass sie nach einer Bedienhandlung eines Nutzers oder initiiert durch ein Sensorsignal einen Notruf auslöst, indem sie eine Absenderangaben und Textdaten zur Notrufsituation enthaltende Notfallnachricht erzeugt und über den Funktransceiver des TEG über das funkgestützte Telekommunikationsnetz (vorzugsweise Mobilfunknetz) an die Backendeinrichtungen aussendet. Ferner ist ihre Ausbildung derart, dass sie bei der Auslösung eines Notrufs mindestens ein Mikrofon und eine Kamera des TEG oder einer mit diesem gekoppelten Endgeräteeinrichtung aktiviert und der Notfallnachricht vor deren Aussendung an die Backendeinrichtungen Aufzeichnungsdaten der mittels des Mikrofons und der Kamera erfassten Umgebung des TEG hinzufügt.

Die Backendeinrichtungen sind erfindungsgemäß dazu ausgebildet, anhand der von dem TEG mit der Notfallnachricht empfangenen Absenderangaben den Aufenthaltsort des Absenders der Notfallnachricht zu ermitteln und den Textdaten der Notfallnachricht Klartextangaben zu diesem Aufenthaltsort hinzuzufügen. Sie sind ferner dazu ausgebildet, die Textdaten der um die Angaben zum Aufenthaltsort ergänzten Notfallnachricht in die Landessprache des ermittelten Aufenthaltsortes zu übersetzen. Da die Textdaten der Notfallnachricht formalisiert sind, das heißt in einer durch die Programmanwendung vorgegebenen Struktur vorliegen, erfolgt diese Übersetzung vorzugsweise unter Rückgriff auf eine entsprechende, zu den Backendeinrichtungen gehörende Datenbank. Darüber hinaus verfügen die Backendeinrichtungen über eine Datenbank, in welcher für eine Vielzahl von Ländern und gegebenenfalls innerhalb dieser Länder für eine Vielzahl von Regionen eine Telekommunikationsadresse (beispielsweise Festnetzrufnummer oder Faxnummer, eine Mobilfunknummer für den SMS-Empfang, eine ftp-Adresse, eine Adresse für Übertragung via Voice over IP, eine Rufnummer für die Videotelefonie oder eine E-Mail-Adresse) für die örtlich zuständige Einsatzleitstelle abgespeichert ist und darüber hinaus vermerkt ist, über welches in dem betreffenden Land zugelassene Übertragungsverfahren die jeweilige Kommunikationsadresse kontaktierbar ist. Nur hierdurch ist es möglich, die automatisiert erzeugte und versendete Notfallnachricht unter Nutzung eines zugelassenen Übertragungsverfahrens unmittelbar der lokal zuständige Einsatzleitstelle zuzuführen.

In Weiterbildung des Systems kann das TEG mit einer Endgeräteeinrichtung gekoppelt sein, bei welcher es sich um ein in oder an einem Fahrzeug, wie beispielsweise in einem Kraftfahrzeug oder an einem Motorrad oder Fahrrad verbautes Notrufsystem handelt. Die Kopplung zwischen dem TEG und dem betreffenden, beispielsweise in einem Kraftfahrzeug verbauten System erfolgt dabei vorzugweise über Bluetooth. In gleicher Weise kann das TEG ferner beziehungsweise alternativ mit einem in ein Bekleidungsstück eingearbeiteten Endgerät oder mit einem Endgerät in Form eines am Körper des Nutzers anlegbaren Accessoires, wie einer Uhr, einem Armband oder einer Brille, also einem so genannten Wearable beziehungsweise einem Gerät für Wearable Computing gekoppelt sein.

Vorzugsweise umfasst darüber hinaus das TEG oder eine mit ihm gekoppelte Endgeräteeinrichtung eine Sende- und Empfangseinrichtung für ein Satellitenortungssystem, wie zum Beispiel GPS, Galileo oder GLONASS. Hierdurch ist eine genauere Feststellung des Aufenthaltsortes des Nutzers zum Zeitpunkt der Auslösung des Notrufs ermöglicht, welche nicht lediglich auf der deutlich ungenaueren, in Mobilfunknetzen ermöglichten Zellortung basiert.

In einer speziellen, unter anderem für Deutschland praxisrelevanten Ausbildung umfasst das erfindungsgemäße System ein Gateway zur Übergabe von durch das TEG über ein Mobilfunknetz ausgesendeten Daten in das Internet und über ein Gateway zur Umsetzung einer durch das TEG als E-Mail an die Backendeinrichtungen übertragenen und von diesen aufgrund eines dafür ausgewählten Übertragungsverfahrens als Faxnachricht an die Einsatzleitstelle weitergeleitete Nachricht. In anderen Ländern kann es sich bei dem letztgenannten Gateway auch um eine Gateway zur Umsetzung der von den Backendeinrichtungen an die Einsatzleitstelle weitergeleiteten Notfallnachricht in eine SMS-, eine E-Mail-, eine MMS-, eine FTP- oder eine Voice over IP Nachricht handeln. Das beziehungsweise die vorgenannten Gateway(s) ist/sind insoweit zumindest temporärer Bestandteil des erfindungsgemäßen Systems. Darüber hinaus können je nach den in einem jeweiligen Land an eine einer hoheitlich eingerichteten Einsatzleitstelle zuzuleitenden Notfallnachricht bestehenden technischen beziehungsweise telekommunikativen Anforderungen in das System auch andere Gateways zumindest temporär einbezogen sein, wie beispielsweise Gateways für SMS to Fax, E-Mail to Fax, für Voice over IP, für SMS to Voice-SMS, für MMS to Fax, für MMS to E-Mail oder andere. Auch kann die Notfallnachricht durch das TEG an die Backendeinrichtungen anstatt in Form einer E-Mail als MMS sowie über FTP-Server (File Transfer Protocol / File Exchange Protocol) übertragen werden.

Im Hinblick auf ein im Zusammenhang mit dem Verfahren bereits angesprochenes automatisiertes Starten des Generierens der Notfallnachricht kann in Weiterbildung des erfindungsgemäßen Systems dessen TEG und/oder die mit diesem gegebenenfalls gekoppelte Endgeräteeinrichtung mit Sensoren, beispielsweise zur Erfassung von Puls- oder Herzfrequenz, Blutdruck, Sauerstoffsättigung des Blutes oder sonstiger Blutwerte ausgestattet sein. Sofern ein oder mehrere entsprechende Sensoren in einer mit dem TEG gekoppelten Endgeräteeinrichtung angeordnet sind und die Endgeräteeinrichtung darüber hinaus mit einer Steuerbeziehungsweise Verarbeitungseinheit ausgestattet ist, kann diese außerdem dazu ausgebildet sein, von den Sensoren erfasste Daten auf das Über- oder Unterschreiten festgelegter (vorzugsweise in einem zur Steuer- beziehungsweise Verarbeitungseinheit gehörenden Speicher gehaltener) Schwellwerte auszuwerten und gegebenenfalls ein Triggersignal zum automatisierten Starten des Generierens einer Notfallnachricht zu erzeugen und an das TEG zu übergeben.

Nachfolgend soll anhand von Zeichnungen ein Ausführungsbeispiel für die Erfindung gegeben und erläutert werden. Im Einzelnen zeigen dazu:
- Fig. 1:: ein auf einem berührungsempfindlichen Display eines TEG visualisiertes Bedienelement zur Auslösung eines Notrufs,
- Fig. 2a:: ein auf dem Display gemäß der Fig. 1 dargestelltes Schema zur Erfassung von Angaben über die Notfallsituation bei Auslösung eines an die Polizei gerichteten Notrufs,
- Fig. 2b:: ein auf dem Display gemäß der Fig. 1 dargestelltes Schema zur Erfassung von Angaben zur Notfallsituation für einen an die Feuerwehr gerichteten Notruf,
- Fig. 3:: ein auf dem Display gemäß der Fig. 1 dargestelltes Schema zur Erfassung von Angaben über die betroffene Person oder betroffenen Personen,
- Fig. 4:: eine auf einem Display gemäß Fig. 1 dargestellte virtuelle Taste für einen eventuellen Abbruch des Notrufs beziehungsweise für dessen Annullierung,
- Fig. 5:: ein grobes Prinzipschema einer möglichen Ausbildung des Notrufsystems.

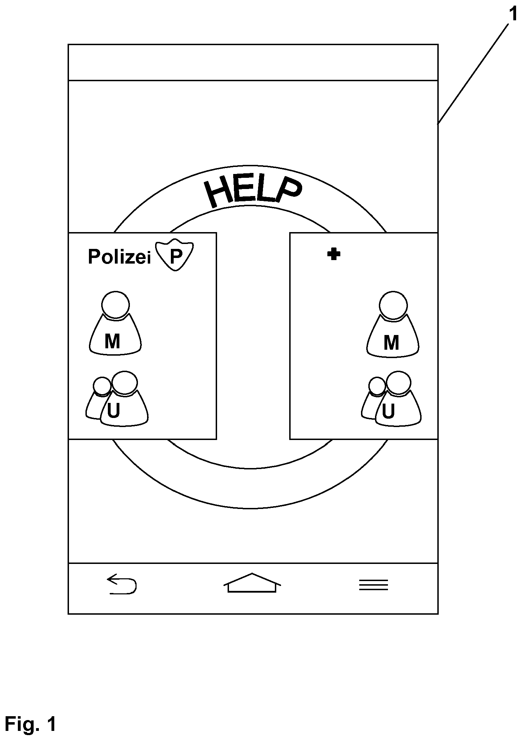

Die Fig. 1 zeigt beispielhaft eine mögliche Ausbildung für ein Bedienelement, welches auf einem berührungsempfindlichen Display beziehungsweise einem Touchscreen eines TEG 1, wie insbesondere eines Smartphones, visualisiert wird. Es handelt sich demnach um ein virtuelles Bedienelement, welches in dem gezeigten Beispiel durch vier virtuelle, durch Berührung der betreffenden Stellen des Touchscreens zu betätigende Tasten ausgebildet ist. Das dargestellte Bedienelement erscheint in dieser Form nach dem Start der erfindungsgemäßen Notruf-App, nämlich einer - um bei dem gewählten Beispiel zu bleiben - durch die Steuereinheit eines Smartphones verarbeitbaren Programmanwendung.

Ein Nutzer, welcher sich in einer Notfallsituation befindet oder Zeuge einer solchen Notfallsituation wird, kann demgemäß durch Betätigen der entsprechenden virtuellen Taste einen Notruf auslösen und eine an die Polizei oder an die Feuerwehr gerichtete Notfallnachricht absetzen, wobei der durch die entsprechende Auswahl der Taste gleichzeitig angibt, ob sich dieser Notruf auf ihn selber (ME) oder auf andere Personen (US) bezieht. Entweder sobald der Nutzer eine dieser virtuellen Tasten betätigt oder bereits mit dem Aufruf beziehungsweise Starten der Notruf-App im Betriebsmodus zum Absetzen einer Notfallnachricht beim Auslösen eines Notrufs, werden durch die App eine Kamera des Smartphones und ein Mikrofon zur optischen und akustischen Aufzeichnung der Umgebung des Smartphones gestartet. Bei den aufgezeichneten optischen Daten kann es sich um mehrere kurz hintereinander aufgenommene Einzelbilder oder um eine kurze Videosequenz handeln. Gleichzeitig wird durch die Notruf-App im Hintergrund die Erzeugung des textlichen Bestandteils der Notfallnachricht gestartet, indem die entsprechenden, zusammen mit den Aufzeichnungsdaten der Kamera und des Mikrofons zu versendenden Textdaten zusammengestellt werden. Hierbei handelt es sich zunächst um Textangaben zum Absender, welche im Klartext zumindest die zur Aktivierung der Notruf-App bei deren erstmaligen Ingebrauchnahme mit ihr assoziierte Kommunikationsadresse des TEG 1 - also vorliegend die Mobilfunknummer des Smartphones - und, aufgrund der durch den Nutzer gedrückten Taste, eine Angabe dazu enthalten, ob der Notruf den Nutzer selbst oder andere Personen betrifft, umfassen.

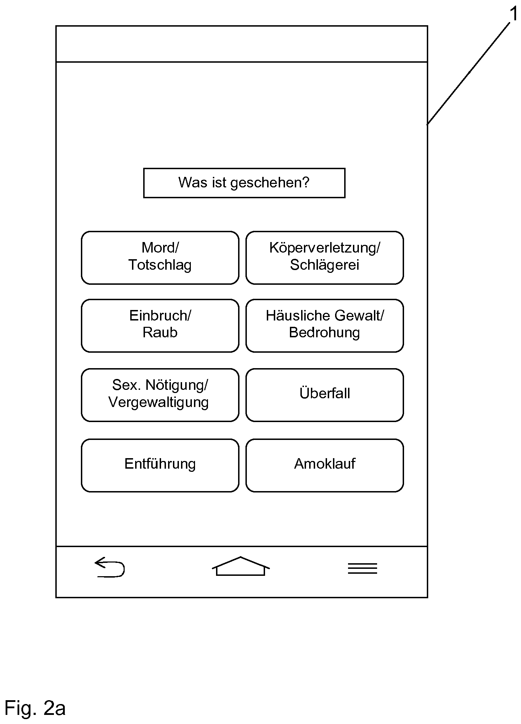

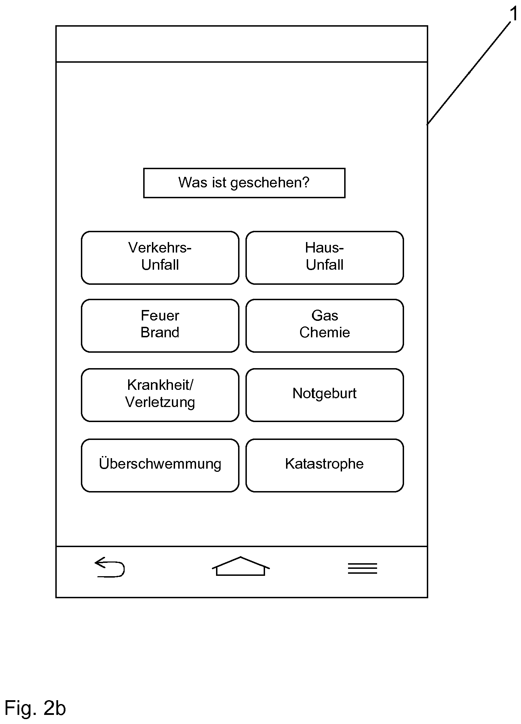

Während der etwa 15 bis 20 Sekunden andauernden optischen und akustischen Aufzeichnung der Umgebung des Smartphones und der im Hintergrund bereits ablaufenden Prozesse zur Zusammenstellung des textlichen Bestandteils der Notfallnachricht werden bei dem Nutzer weitere, jeweils lediglich immer nur durch Betätigung einer Taste beziehungsweise virtuellen Taste zu machende Angaben erfragt, welche ebenfalls dem Nachrichtentext hinzugefügt werden. Beispiele für die insoweit erfassten Angaben werden durch die Schemata in den Fig. 2a und 2b gegeben. Es handelt sich hierbei um schematisch vereinfachte, beispielhafte Darstellungen eines auf dem Display des TEG 1 gemäß der Fig. 1 visualisierten Menüs, mittels welchem durch den Nutzer des TEG 1 die Notfallsituation betreffende Angaben gemacht werden können, indem er das Display an der entsprechenden Position berührt.

Demgemäß wird laut Fig. 2a, im Falle dessen, dass der Notruf an die Polizei gerichtet ist, von dem Nutzer abgefragt, welcher Art die Notfallsituation ist. Der Nutzer kann hierbei durch Betätigung der entsprechenden virtuellen Taste die im vorliegenden Fall zutreffende Kategorie auswählen. Gemäß dem Schema in der Fig. 2a werden ihm demnach die Kategorien Mord/Totschlag, Einbruch/Raub, sexuelle Nötigung/Vergewaltigung, Körperverletzung/Schlägerei, häusliche Gewalt/Bedrohung, Überfall und Amoklauf vorgegeben. Selbstverständlich werden diese sowie die im Weiteren beispielhaft genannten Kategorien und Angaben dem Nutzer in einer von ihm zu einem früheren Zeitpunkt im Zuge der Installation der Notruf-App beziehungsweise ihrer Konfiguration festgelegten Bedienungssprache ausgegeben. Gegebenenfalls kann die Bedienungssprache aber auch in Abhängigkeit des Auslieferungslandes der Notruf-App festgelegt sein. Demgemäß wird ein Nutzer in Großbritannien oder den USA die zuvor beispielhaft genannten Kategorien in englischer Sprache präsentiert bekommen.

In der Fig. 2b ist ein Schema für die von dem Nutzer nach der Betätigung der virtuellen Taste zur Auslösung eines an die Feuerwehr gerichteten Notrufs zu erfragenden Angaben wiedergegeben. Der Nutzer kann demnach hier angeben, ob sich der Notruf auf einen Verkehrsunfall, ein Feuer beziehungsweise einen Brand, auf Krankheit/Verletzung, auf eine Überschwemmung, einen Hausunfall, einen Gas oder Chemieunfall, auf eine sonstige Katastrophe oder auf eine Notgeburt bezieht.

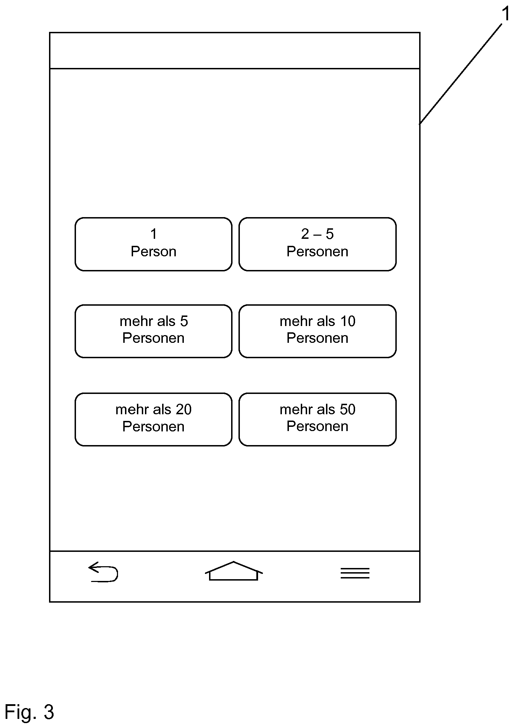

Schließlich wird von dem Nutzer noch gemäß dem in der Fig. 3 beispielhaft gezeigten Schema eine Angabe dazu eingeholt, wie viele Personen durch den Notfall betroffen oder in diesen involviert sind. Auch diese Angabe macht der Nutzer durch die Betätigung einer virtuellen Taste, das heißt die Berührung des Touchscreens des TEG 1 gemäß der Fig. 1 an betreffender, diese Taste visualisierender Stelle.

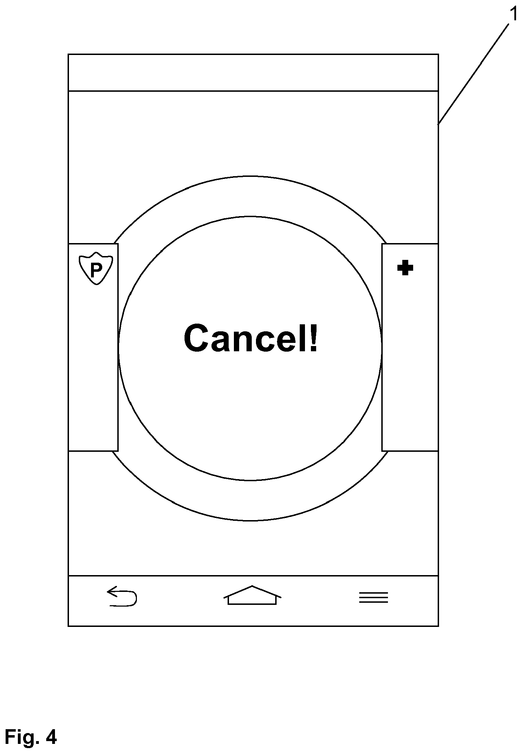

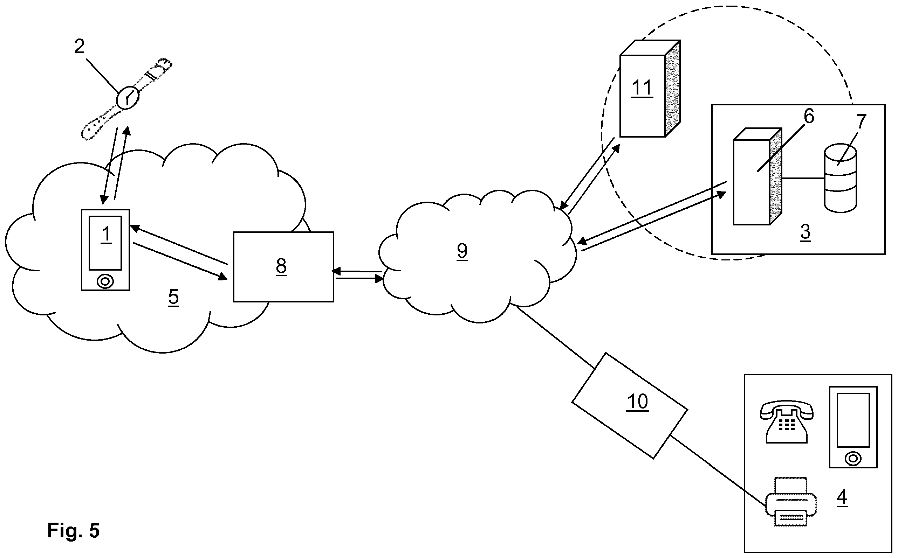

Nach der Ausführung dieses Bedienschrittes wird die Versendung der Notfallnachricht an die Backendeinrichtungen 3 (siehe Fig. 5) veranlasst, aber gleichzeitig ein Countdown zur verzögerten Aussendung dieser Nachricht gestartet, wobei, wie schon ausgeführt, unabhängig davon eine Aussendung der Notfallnachricht erst erfolgt, wenn die Mindestdauer für die akustische und visuelle beziehungsweise optische Aufzeichnung der Umgebung des TEG 1 respektive Smartphones erreicht ist. Während des letztgenannten Countdowns wird auf dem Display des Smartphones, wie in Fig. 4 beispielhaft gezeigt, eine virtuelle Taste dargestellt, deren Betätigung dem Nutzer einen Abbruch des Notrufs ermöglicht, wenn dieser beispielsweise durch ihn versehentlich oder irrtümlich eingeleitet wurde. Zusätzlich kann der Nutzer auf die Möglichkeit eines solchen Abbruchs durch ein Vibrationssignal des TEG 1 aufmerksam gemacht werden. Die letztgenannte virtuelle Taste kann dabei vorzugsweise mit einem Internationalismus für den Abbruch (Cancel) oder aber auch mit einer entsprechenden Angabe in der Landessprachen für welche das TEG 1 konfiguriert wurde, wie beispielsweise "Abbruch" für Deutschland gekennzeichnet sein.

In der Fig. 5 ist beispielhaft ein sehr vereinfachtes Schema des erfindungsgemäßen Systems wiedergegeben. Demnach bilden den Kern des Systems ein von einem Nutzer zum automatisierten Absetzen einer Notfallnachricht bei der Auslösung eines Notrufs zu verwendendes TEG 1, wie beispielsweise das vorstehend schon erwähnte Smartphone und die mit dem TEG 1 über ein Netzwerk verbundenen, mindestens einen Server 6 und eine Datenbank 7 umfassenden Backendeinrichtungen 3, welche die von dem TEG 1 ausgesendete Notfallnachricht empfangen, verarbeiten und schließlich an die lokal zuständige Einsatzleitstelle 4 weiterleiten. Dabei wird die Aussendung der Notfallnachricht von der durch die Steuereinheit des Smartphones oder durch die Steuereinheit einer mit dem Smartphone gekoppelten Endgeräteeinrichtung 2, wie beispielsweise einer Smart Watch, verarbeitete Notfall-App veranlasst.

Dem Grunde nach gehören auch die jeweils angesprochene lokal zuständige Einsatzleitstelle 4 und deren Einrichtungen sowie Einrichtungen eines öffentlichen Netzwerks, nämlich Zugangseinrichtungen, Gateways und dergleichen, zu dem Notrufsystem, wobei jedoch diese Einheiten und Einrichtungen, im Hinblick darauf, dass diese zur öffentlichen Infrastruktur gehören, im Rahmen der Patentansprüche teilweise nicht als Bestandteil des eigentlichen beziehungsweise erfindungsgemäßen Systems angesehen werden.

Sobald die mit der Auslösung des Notrufs gestartete Aufzeichnung der akustischen und visuellen Umgebung des TEG (Smartphones) beendet ist und der textliche Teil der Notfallnachricht unter Berücksichtigung der gemäß Fig. 2a, 2b und 3 eingeholten Angaben durch die Notruf-App zusammengestellt worden ist, wird die Notfallnachricht an die Backendeinrichtungen 3 übermittelt. Hierbei wird die entsprechende Notfallnachricht beispielsweise als E-Mail ausgesendet. Demnach wird die Nachricht den Backendeinrichtungen über ein im Übergangsbereich zwischen dem Mobilfunknetz und dem Internet 9 angeordnetes Gateway 8 zugeleitet. In den Backendeinrichtungen 3 wird dann der augenblickliche Aufenthaltsort des den Notruf auslösenden und die Notfallnachricht absetzenden Nutzers unter Auswertung einer Zellinformation des in das Mobilfunknetz eingebuchten TEG 1 (Smartphones) oder vorzugsweise einer in dem TEG 1 aktivierten Sende- und Empfangseinheit eines Satellitenortungssystems ermittelt. Ausgehend hiervon werden die textlichen Teile der Notfallnachricht, vorzugsweise unter Rückgriff auf entsprechende Datenbankeinträge der Datenbank 7 der Backendeinrichtungen, in die Landessprache des aktuellen Aufenthaltsortes des die Notfallnachricht absendenden Nutzers übersetzt. Schließlich wird anhand des für den Nutzer ermittelten Aufenthaltsorts durch die Backendeinrichtungen 3, wiederum durch Rückgriff auf entsprechende Datenbankeinträge ermittelt, welcher lokal zuständigen Einsatzleitstelle 4 die Notfallnachricht unter Verwendung welcher Empfängeradresse (beispielsweise Festnetzrufnummer beziehungsweise Faxnummer der Einsatzleitstelle) und welches Übertragungsverfahrens zuzuleiten ist. Die entsprechende, gegebenenfalls beziehungsweise erforderlichenfalls in die Landessprache übersetzte Notfallnachricht wird dann einschließlich der Aufzeichnungsdaten aus der Umgebung des TEG 1 oder eines Links zu diesen Aufzeichnungsdaten beispielsweise über ein E-Mail-to-Fax-Gateway 10 übermittelt.

Zu den Backendeinrichtungen 3 des Notrufsystems gehören, wie dies durch die gestrichelte Linie angedeutet ist, gegebenenfalls, aber nicht zwingend, auch noch Servereinrichtungen 11 zum Download der erfindungsgemäßen Notruf-App.

## Patentansprüche

1. Verfahren zum automatisierten Absetzen einer Notfallnachricht bei einem Notruf, der durch eine dazu an einem TEG (1), nämlich einem mit einer Steuereinheit und einem Funktransceiver ausgestatteten mobilen Telekommunikationsendgerät, oder an einer mit diesem TEG (1) gekoppelten Endgeräteeinrichtung (2) vorzunehmende Bedienhandlung oder durch mindestens ein Sensorsignal ausgelöst wird, wobei beim Auslösen des Notrufs durch eine von der Steuereinheit des TEG (1) oder von einer Steuereinheit einer mit ihm gekoppelten Endgeräteeinrichtung (2) verarbeitete Programmanwendung eine Notfallnachricht erzeugt wird, welche Absenderangaben und Textdaten zur Notrufsituation sowie mittels mindestens eines Mikrofons und mittels mindestens einer Kamera erfasste akustische und optische Aufzeichnungsdaten der Umgebung des TEG (1) enthält und welche durch das TEG (1) über ein funkgestütztes Telekommunikationsnetz (5) an Backendeinrichtungen (3) eines Notrufsystems ausgesendet wird, wo die textlichen Teile der Notfallnachricht in die Landessprache des dem Aufenthaltsort entsprechenden Aufenthaltslandes übersetzt werden, **dadurch gekennzeichnet, dass**
a.) das mindestens eine Mikrofon und die mindestens eine Kamera des TEG (1) oder einer mit dem TEG (1) gekoppelten Endgeräteeinrichtung (2) durch die zur Generierung der Notfallnachricht verarbeitete Programmanwendung zur Erfassung mit einer Mindestdauer aufgezeichneter akustischer und optischer Daten der Umgebung des TEG (1) gestartet werden,
b.) durch die Backendeinrichtungen (3) anhand der von dem TEG (1) mit der Notfallnachricht empfangenen Absenderangaben der Aufenthaltsort des Absenders der Notfallnachricht ermittelt wird und die Textdaten der Notfallnachricht um Klartextangaben zu dem ermittelten Aufenthaltsort ergänzt werden,
c.) die aus den übersetzten Textdaten und entweder unmittelbar aus den akustischen sowie optischen Aufzeichnungsdaten oder aus einem Link zu diesen, auf einem Server der Backendeinrichtungen (3) gehalten Aufzeichnungsdaten bestehende Notfallnachricht durch die Backendeinrichtungen (3) zumindest unmittelbar an mindestens eine hoheitlich bestimmte, lokal zuständige Einsatzleitstelle (4) unter Nutzung eines in dem Aufenthaltsland zur Kontaktierung dieser Einsatzleitstelle (4) zugelassenen Übertragungsverfahrens übermittelt wird, wobei das zugelassene Übertragungsverfahren und die dafür zu verwendende Telekommunikationsadresse der Einsatzleitstelle (4) einem in einer Datenbank (7) der Backendeinrichtungen (3) zu dem Aufenthaltsland gehaltenen Datenbankeintrag entnommen werden.

2. Verfahren nach Anspruch 1, **dadurch gekennzeichnet, dass** die Programmanwendung vor ihrem ersten Einsatz zum Zweck der Erzeugung und Aussendung einer Notfallnachricht das Durchlaufen einer Aktivierungsprozedur erfordert, gemäß welcher durch die Programmanwendung nach ihrem Start auf dem TEG (1) oder auf einer mit dem TEG (1) gekoppelten Endgeräteeinrichtung (2) und einem seitens des Nutzers durch eine entsprechende Bedienhandlung an dem TEG (1) oder an einer mit dem TEG (1) gekoppelten Endgeräteeinrichtung (2) gegebenen Einverständnis eine Kurznachricht mit einer Absenderadresse des TEG (1) an die Backendeinrichtungen (3) übertragen und die Programmanwendung durch Verarbeitung als Antwort auf diese Nachricht durch das TEG (1) empfangener Daten für die Verwendung zur Auslösung von Notrufen mit automatisierter Aussendung einer Notfallnachricht freigeschaltet wird, wobei die Absenderadresse in einem nichtmanipulierbaren Speicher abgelegt und aus diesem heraus durch die Programmanwendung jeder später auszusendenden Notfallnachricht hinzugefügt wird, so dass die Programmanwendung mit dem TEG (1) über diese Absenderadresse assoziiert ist.

3. Verfahren nach Anspruch 2, **dadurch gekennzeichnet, dass** durch die Programmanwendung zum Zweck ihrer Aktvierung eine SMS mit einer Mobilfunknummer des TEG (1) an die Backendeinrichtungen (3) übertragen wird, wo die Mobilfunknummer unter Einbeziehung von Einrichtungen eines Mobilfunkbetreibers durch Überprüfung ihrer Zugehörigkeit zu der ebenfalls mit übertragenen IMEI des TEG (1) verifiziert wird und dass im Falle einer erfolgreichen Verifizierung der Mobilfunknummer durch die Backendeinrichtungen (3) die zur Freischaltung der Programmanwendung auf dem TEG führende Antwort an das TEG (1) übertragen wird.

4. Verfahren nach Anspruch 1, **dadurch gekennzeichnet, dass** beim Eingang einer Notfallnachricht in den Backendeinrichtungen (3) mittels der empfangenen Absenderangaben auf ein in einer Datenbank (7) der Backendeirichtungen (3) zu einem mit dem TEG (1) assoziierten Nutzer hinterlegtes Profil zugegriffen wird und den Textdaten der Notfallnachricht Angaben zur Person dieses Nutzers hinzugefügt werden, welche in einem auch spätere Änderungen des Profils ermöglichenden Konfigurationsmodus der Programmanwendung menügeführt bei dem Nutzer erfragt und an die Backendeinrichtungen (3) übertragen werden.

5. Verfahren nach Anspruch 4, **dadurch gekennzeichnet, dass** die in der Datenbank (7) der Backendeinrichtungen (3) gehaltenen Profildaten medizinische Angaben umfassen, welche den Textdaten der Notfallnachricht hinzugefügt werden.

6. Verfahren nach Anspruch 1 oder 4, **dadurch gekennzeichnet, dass** die Bedienhandlung zur Auslösung des Notrufs mehrere Bedienschritte umfasst, durch deren Ausführung der die Bedienhandlung ausführende Nutzer des TEG (1) Angaben zur Art des Notfalls, zu der oder den betroffenen Personen und deren Anzahl macht, welche der Notfallnachricht bei ihrer Erzeugung durch die Programmanwendung als Klartextangabe hinzugefügt werden.

7. Verfahren nach Anspruch 6, **dadurch gekennzeichnet, dass** nach der Ausführung des letzten Bedienschrittes der Bedienhandlung durch die Programmanwendung ein Countdown gestartet wird, bis zu dessen Ablauf das Aussenden der Notfallnachricht verzögert wird, wobei der Nutzer während des Ablaufens dieses Countdowns die Möglichkeit hat, die Aussendung der Notfallnachricht durch eine weitere Bedienhandlung zu unterbinden und so den Notruf zu annullieren.

8. Verfahren nach Anspruch 1, **dadurch gekennzeichnet, dass** der an die Backendeinrichtungen (3) auszusendenden und von diesen an die Einsatzleitstelle weiterzuleitenden Notfallnachricht durch die Programmanwendung eine Textinformation über den augenblicklichen Ladezustand des Akkumulators des TEG (1) hinzugefügt wird.

9. Verfahren nach Anspruch 1, **dadurch gekennzeichnet, dass** bei der Auslösung eines Notruf zusätzlich zur Aussendung der von der Programmanwendung erzeugten Notfallnachricht eine ebenfalls von der Programmanwendung erzeugte Informationsnachricht an eine oder mehrere durch den Nutzer des TEG (1) bestimmte Personen übermittelt wird, wobei Angaben zu diesen Personen, nämlich insbesondere Angaben zu der Art der an eine jeweilige Person zu übermittelnden Informationsnachricht und über eine dafür zu nutzende Empfängeradresse der betreffenden Person, in einem Konfigurationsmodus der Programmanwendung in einem Speicher des TEG (1) oder einer mit diesem gekoppelten Endgeräteeinrichtung (2) hinterlegbar sind.

10. Verfahren nach Anspruch 1, **dadurch gekennzeichnet, dass** durch die Programmanwendung im Falle dessen, dass keine Verbindung zu den Backendeinrichtungen (3) besteht, automatisiert auf einem Display des TEG (1) und/oder einer mit diesem gekoppelten Endgeräteeinrichtung (2) die für das augenblickliche Aufenthaltsland des TEG (1) geltende zentrale Notrufnummer ausgegeben wird, wobei diese Notrufnummer ausgehend von einer Netzinformation eines mit dem TEG (1) augenblicklich genutzten oder zuletzt mit dem TEG (1) nutzbaren Kommunikationsnetzes und dem sich aus dieser Netzinformation ergebenden Aufenthaltsland des Nutzers aus einem im Zugriff der die Programmanwendung verarbeitenden Steuereinheit stehenden Speicher des TEG (1) oder einer mit ihm gekoppelten Endgeräteeinrichtung (2) ausgelesen wird.

11. System zum automatisierten Absetzen einer Notfallnachricht bei einem Notruf, mit mindestens einen Server (6) und eine Datenbank (7) umfassenden Backendeinrichtungen (3) und mit einem mit den Backendeinrichtungen (3) über ein Netzwerk verbundenen TEG (1), nämlich einem mit einer Steuereinheit und einem Funktransceiver ausgestatteten mobilen Telekommunikationsendgerät, wobei das TEG (1) oder eine mit diesem gekoppelte, ebenfalls eine Steuereinheit aufweisende Endgeräteeinrichtung (2) mit einer von der Steuereinheit des betreffenden Gerätes verarbeitbaren Programmanwendung ausgestattet ist, welche dazu ausgebildet ist, bei Auslösung eines Notrufs eine Absenderangaben und Textdaten zur Notrufsituation sowie mittels mindestens eines Mikrofons und mindestens einer Kamera erfasste akustische und optische Aufzeichnungsdaten der Umgebung des TEG (1) enthaltende Notfallnachricht zu erzeugen und über den Funktransceiver des TEG (1) sowie über ein funkgestütztes Telekommunikationsnetz (5) an die Backendeinrichtungen (3) auszusenden, welche dazu ausgebildet sind, die textlichen Teile der Notfallnachricht in die Landessprache des dem Aufenthaltsort entsprechenden Aufenthaltslandes zu übersetzen, **dadurch gekennzeichnet, dass**
a.) das TEG (1) oder eine mit diesem gekoppelte Endgeräteeinrichtung (2) dazu ausgebildet sind, einen Notruf aufgrund einer an ihnen ausgeführten Bedienhandlung oder initiiert durch einen Sensor des TEG (1) oder einer mit diesem gekoppelten Endgeräteeinrichtung (3) auszulösen,
b.) die von der Steuereinheit des TEG (1) oder einer mit ihm gekoppelten Endgeräteeinrichtung (2) verarbeitbare Programmanwendung derart ausgebildet ist, bei der Auslösung eines Notrufs mindestens ein Mikrofon und mindestens eine Kamera des TEG (1) oder einer mit dem TEG (1) gekoppelten Endgeräteeinrichtung (2) für eine vorgegebene Zeitdauer zu aktivieren und der Notfallnachricht vor deren Aussendung an die Backendeinrichtungen (3) Aufzeichnungsdaten der mittels des mindestens einen Mikrofons und der mindestens einen Kamera erfassten Umgebung des TEG (1) hinzuzufügen,
c.) die Backenendeinrichtungen (3) dazu ausgebildet sind, anhand der von dem TEG (1) mit der Notfallnachricht empfangenen Absenderangaben den Aufenthaltsort des Absenders der Notfallnachricht zu ermitteln und den Textdaten der Notfallnachricht Klartextangaben zu dem ermittelten Aufenthaltsort hinzuzufügen,
d.) die Backenendeinrichtungen (3) dazu ausgebildet sind, die Notrfallnachricht, bestehend aus den übersetzten Textdaten und entweder unmittelbar aus den akustischen sowie optischen Aufzeichnungsdaten oder aus einem Link zu den in diesem Fall auf einem Server der Backendeinrichtungen (3) gehaltenen Aufzeichnungsdaten, unmittelbar an eine hoheitlich bestimmte, lokal zuständige Einsatzleistelle (4) unter Nutzung eines in dem Aufenthaltsland zur Kontaktierung dieser Einsatzleistelle (4) zugelassenen Übertragungsverfahrens zu übermitteln, wobei das zugelassene Übertragungsverfahren und die dafür zu verwendende Telekommunikationsadresse der Einsatzleistelle (4) einem in der Datenbank (7) der Backendeinrichtungen (3) zu dem Aufenthaltsland gehaltenen Datenbankeintrag entnommen werden.

12. System nach Anspruch 11, **dadurch gekennzeichnet, dass** das TEG (1) mit einer Endgeräteeinrichtung gekoppelt ist, bei welcher es sich um ein Notrufsystem in oder an einem Fahrzeug handelt.

13. System nach Anspruch 11, **dadurch gekennzeichnet, dass** das TEG (1) mit einer Endgeräteeinrichtung (2) gekoppelt ist, bei welcher es sich um ein in ein Bekleidungsstück des Nutzers eingearbeitetes Endgerät oder um ein Wearable, nämlich um ein in Form eines Accessoires von dem Nutzer des TEG (1) an seinem Körper anlegbares Endgerät, handelt.

14. System nach einem der Ansprüche 11 bis 13, **dadurch gekennzeichnet, dass** das TEG (1) oder eine mit ihm gekoppelte Endgeräteeinrichtung (2) eine Sende- und Empfangseinrichtung für ein Satellitenortungssystem umfasst.

## Claims

1. Method for automatically transmitting an emergency message in the event of an emergency call which is triggered by an operational action to be performed for this purpose on a telecommunications terminal (1), namely a mobile communications terminal equipped with a control unit and a radio transceiver, or on a terminal device (2) coupled to this telecommunications terminal (1) or by at least one sensor signal, wherein, when the emergency call is triggered, a program application processed by the control unit of the telecommunications terminal (1) or by a control unit of a terminal device (2) coupled to the latter generates an emergency message which contains sender details and text data relating to the emergency call situation, as well as acoustic and optical recorded data relating to the environment of the telecommunications terminal (1) which are captured by means of at least one microphone and at least one camera, and is transmitted by the telecommunications terminal (1), via a radio-based telecommunications network (5), to backend devices (3) of an emergency call system, where the textual parts of the emergency message are translated into the national language of the country of residence corresponding to the whereabouts, **characterized in that**
a. ) the at least one microphone and the at least one camera of the telecommunications terminal (1) or of a terminal device (2) coupled to the telecommunications terminal (1) are started by the program application processed for the purpose of generating the emergency message in order to capture acoustic and optical data relating to the environment of the telecommunications terminal (1) which are recorded with a minimum duration,
b.) the whereabouts of the sender of the emergency message are determined by the backend devices (3) on the basis of the sender details received from the telecommunications terminal (1) with the emergency message and the text data of the emergency message are supplemented with plain text details of the determined whereabouts,
c.) the emergency message consisting of the translated text data and either directly of the acoustic and optical recorded data or of a link to these recorded data held on a server of the backend devices (3) is at least directly transmitted by the backend devices (3) to at least one sovereignly determined, locally responsible emergency services control centre (4) using a transmission method permitted in the country of residence for the purpose of making contact with this emergency services control centre (4), wherein the permitted transmission method and the telecommunications address of the emergency services control centre (4) to be used for this purpose are gathered from a database entry held in a database (7) of the backend devices (3) for the country of residence.

2. Method according to Claim 1, **characterized in that**, before being used for the first time for the purpose of generating and transmitting an emergency message, the program application requires an activation procedure to be run through, according to which the program application, after being started on the telecommunications terminal (1) or on a terminal device (2) coupled to the telecommunications terminal (1) and after agreement given by the user by means of a corresponding operational action on the telecommunications terminal (1) or on a terminal device (2) coupled to the telecommunications terminal (1), transmits a short message containing a sender address of the telecommunications terminal (1) to the backend devices (3), and the program application is released for use for triggering emergency calls with automated transmission of an emergency message by processing data received by the telecommunications terminal (1) in response to this message, wherein the sender address is stored in a memory which cannot be manipulated and, from the latter, is added by the program application to each emergency message to be subsequently transmitted, with the result that the program application is associated with the telecommunications terminal (1) via this sender address.

3. Method according to Claim 2, **characterized in that**, for the purpose of being activated, the program application transmits an SMS with a mobile phone number of the telecommunications terminal (1) to the backend devices (3), where the mobile phone number is verified, with the inclusion of devices belonging to a mobile phone operator, by checking its affiliation with the IMEI of the telecommunications terminal (1) which is likewise concomitantly transmitted, and **in that**, if the mobile phone number is successfully verified, the response leading to the release of the program application on the telecommunications terminal is transmitted by the backend devices (3) to the telecommunications terminal (1).

4. Method according to Claim 1, **characterized in that**, when an emergency message is received in the backend devices (3), a profile stored for a user associated with the telecommunications terminal (1) in a database (7) of the backend devices (3) is accessed by means of the received sender details, and details of the person of this user, which are requested from the user in a menu-guided manner in a configuration mode of the program application that also enables subsequent changes to the profile and are transmitted to the backend devices (3), are added to the text data of the emergency message.

5. Method according to Claim 4, **characterized in that** the profile data held in the database (7) of the backend devices (3) comprise medical details which are added to the text data of the emergency message.

6. Method according to Claim 1 or 4, **characterized in that** the operational action for triggering the emergency call comprises a plurality of operating steps, as a result of the performance of which the user of the telecommunications terminal (1) performing the operational action provides details on the type of emergency, the person(s) affected and the number of persons, which details are added to the emergency message as plain text when the emergency message is being generated by the program application.

7. Method according to Claim 6, **characterized in that**, after the last operating step of the operational action has been performed, the program application starts a countdown, until the expiry of which the transmission of the emergency message is delayed, wherein, during the running of this countdown, the user has the possibility of preventing the transmission of the emergency message by means of a further operational action and thus cancelling the emergency call.

8. Method according to Claim 1, **characterized in that** an item of text information relating to the current state of charge of the rechargeable battery of the telecommunications terminal (1) is added by the program application to the emergency message which is to be transmitted to the backend devices (3) and is to be forwarded from the latter to the emergency services control centre.

9. Method according to Claim 1, **characterized in that**, when an emergency call is triggered, in addition to transmitting the emergency message generated by the program application, an information message which is likewise generated by the program application is transmitted to one or more persons determined by the user of the telecommunications terminal (1), wherein details of these persons, namely, in particular, details of the type of information message to be transmitted to a respective person and a recipient address of the relevant person to be used for this purpose, can be stored in a memory of the telecommunications terminal (1) or of a terminal device (2) coupled to the latter in a configuration mode of the program application.

10. Method according to Claim 1, **characterized in that**, if there is no connection to the backend devices (3), the program application automatically outputs the central emergency call number applicable to the current country of residence of the telecommunications terminal (1) on a display of the telecommunications terminal (1) and/or of a terminal device (2) coupled to the latter, wherein this emergency call number is read from a memory of the telecommunications terminal (1) or of a terminal device (2) coupled to the latter, which memory is accessed by the control unit processing the program application, on the basis of an item of network information relating to a communications network which is currently used with the telecommunications terminal (1) or could last be used with the telecommunications terminal (1) and on the basis of the country of residence of the user resulting from this network information.

11. System for automatically transmitting an emergency message in the event of an emergency call, having backend devices (3) comprising at least one server (6) and a database (7) and having a telecommunications terminal (1) connected to the backend devices (3) via a network, namely a mobile telecommunications terminal equipped with a control unit and a radio transceiver, wherein the telecommunications terminal (1) or a terminal device (2) which is coupled to the latter and likewise has a control unit is equipped with a program application which can be processed by the control unit of the relevant device and is designed, if an emergency call is triggered, to generate an emergency message containing sender details and text data relating to the emergency call situation, as well as acoustic and optical recorded data relating to the environment of the telecommunications terminal (1) which are captured by means of at least one microphone and at least one camera, and to transmit said message, via the radio transceiver of the telecommunications terminal (1) and via a radio-based telecommunications network (5), to the backend devices (3) which are designed to translate the textual parts of the emergency message into the national language of the country of residence corresponding to the whereabouts, **characterized in that**
a.) the telecommunications terminal (1) or a terminal device (2) coupled to the latter is designed to trigger an emergency call on the basis of an operational action performed on it or initiated by a sensor of the telecommunications terminal (1) or of a terminal device (3) coupled to the latter,
b.) the program application which can be processed by the control unit of the telecommunications terminal (1) or of a terminal device (2) coupled to the latter is designed, when an emergency call is triggered, to activate at least one microphone and at least one camera of the telecommunications terminal (1) or of a terminal device (2) coupled to the telecommunications terminal (1) for a predefined period and to add recorded data relating to the environment of the telecommunications terminal (1), which is captured by means of the at least one microphone and the at least one camera, to the emergency message before the latter is transmitted to the backend devices (3),
c.) the backend devices (3) are designed to determine the whereabouts of the sender of the emergency message on the basis of the sender details received from the telecommunications terminal (1) with the emergency message and to add plain text details of the determined whereabouts to the text data of the emergency message,
d.) the backend devices (3) are designed to directly transmit the emergency message consisting of the translated text data and either directly of the acoustic and optical recorded data or of a link to the recorded data held in this case on a server of the backend devices (3) to a sovereignly determined, locally responsible emergency services control centre (4) using a transmission method permitted in the country of residence for the purpose of making contact with this emergency services control centre (4), wherein the permitted transmission method and the telecommunications address of the emergency services control centre (4) to be used for this purpose are gathered from a database entry held in the database (7) of the backend devices (3) for the country of residence.

12. System according to Claim 11, **characterized in that** the telecommunications terminal (1) is coupled to a terminal device which is an emergency call system in or on a vehicle.

13. System according to Claim 11, **characterized in that** the telecommunications terminal (1) is coupled to a terminal device (2) which is a terminal incorporated in an article of clothing of the user or a wearable, namely a terminal in the form of an accessory which can be placed by the user of the telecommunications terminal (1) on his body.

14. System according to one of Claims 11 to 13, **characterized in that** the telecommunications terminal (1) or a terminal device (2) coupled to the latter comprises a transmitting and receiving device for a satellite positioning system.

## Revendications

1. Procédé d'envoi automatique d'un message d'urgence lors d'un appel d'urgence qui est déclenché par une manipulation à effectuer à cet effet sur un TEG (Terminal de télécommunication) (1), notamment sur un terminal de télécommunication mobile équipé d'une unité de commande et d'un émetteur-récepteur radio, ou sur un dispositif terminal couplé audit TEG (1) ou par au moins un signal de capteur, dans lequel, lors du déclenchement de l'appel d'urgence, un message d'urgence est généré par une application de programme exécutée par l'unité de commande du TEG (1) ou par une unité de commande d'un dispositif terminal (2) couplé à cette dernière, qui contient des renseignements concernant l'émetteur et des données textuelles concernant la situation de l'appel d'urgence ainsi que des données d'enregistrement acoustiques et optiques de l'environnement du TEG (1), qui sont détectées au moyen d'au moins un microphone et au moyen d'au moins une caméra, et qui est émis par le TEG (1) par l'intermédiaire d'un réseau de télécommunication à support radio (5) à des dispositifs centraux (3) d'un système d'appel d'urgence où les parties textuelles du message d'urgence sont traduits dans la langue nationale du pays d'accueil correspondant à la localisation, **caractérisé en ce que**
a) ledit au moins un microphone et ladite au moins une caméra du TEG (1) ou d'un dispositif terminal (2) couplé au TEG (1) sont mis en fonctionnement par l'application de programme exécutée pour générer le message d'urgence à des fins de détection de données acoustiques et optiques de l'environnement du TEG (1) enregistrées pendant une durée minimale,
b) le lieu de séjour de l'émetteur du message d'appel d'urgence est déterminé par les dispositifs centraux (3) sur la base des renseignements concernant l'émetteur reçus du TEG (1) avec le message d'urgence et les données textuelles du message d'urgence sont complétées par des données en texte clair afin d'obtenir la localisation déterminée,
c) le message d'urgence, constitué des données textuelles traduites et soit de données d'enregistrement obtenues directement à partir des données d'enregistrement acoustiques et optiques, soit d'un lien pointant sur celles-ci sur un serveur des dispositifs centraux (3), est transféré par les dispositifs centraux (3) au moins directement à au moins un poste d'intervention (4) d'une autorité déterminée locale par utilisation d'un procédé de transmission autorisé dans le pays d'accueil pour contacter ledit poste d'intervention (4), dans lequel le procédé de transmission autorisé et l'adresse de télécommunication utilisée à cet effet du poste d'intervention (4) sont obtenus à partir d'une entrée de base de données maintenue dans le pays d'accueil dans une base de données (7) des dispositifs centraux (3).

2. Procédé selon la revendication 1, **caractérisé en ce que** l'application de programme nécessite, avant sa première utilisation, afin de générer et d'émettre un message d'urgence, l'exécution d'une procédure d'activation conformément à laquelle un message court contenant une adresse d'émission du TEG (1) est transmis aux dispositifs centraux (3) par l'application de programme après son démarrage, lequel message court concerne le TEG (1) ou un dispositif terminal (2) couplé au TEG (1) et un accord donné du côté du conducteur par une manipulation correspondante sur le TEG (1) ou sur un dispositif terminal (2) couplé au TEG (1) et l'application de programme est lancée par traitement de données reçues par le TEG (1) en réponse audit message, pour l'utilisation destinée à déclencher des appels d'urgence avec émission automatisée d'un message d'urgence, dans lequel l'adresse de l'émetteur est stockée dans une mémoire ne pouvant pas être manipulée et à partir de celle-ci est ajoutée par l'application de programme, à chaque message d'appel d'urgence devant être émis ultérieurement de manière à ce que l'application de programme soit associée au TEG (1) par l'intermédiaire de ladite adresse de l'émetteur.

3. Procédé selon la revendication 2, **caractérisé en ce qu'**un SMS comportant un numéro de mobile du TEG (1) est transmis aux dispositifs centraux (3) par l'application de programme afin d'activer cette dernière, dispositifs centraux sur lesquels le numéro de mobile est vérifié en tenant compte de moyens d'un opérateur mobile par vérification de leur appartenance à l'identification IMEI également transmise du TEG (1) et **en ce que**, dans le cas d'un résultat positif de la vérification du numéro de mobile par les dispositifs centraux (3), la réponse conduisant à un lancement de l'application de programme sur le TEG est transmise au TEG (1).

4. Procédé selon la revendication 1, **caractérisé en ce que**, lors de l'arrivée d'un message d'appel d'urgence sur les dispositifs centraux (3), un accès est effectué, au moyen des renseignements reçus concernant l'émetteur, à un profil stocké dans une base de données (7) des dispositifs centraux (3) pour un utilisateur associé au TEG (1) et des renseignements concernant la personne dudit utilisateur sont ajoutées aux données textuelles du message d'urgence, lesquels renseignements sont demandés à l'utilisateur au moyen d'un menu dans un mode de configuration de l'application de programme permettant également des modifications ultérieures du profil et sont transmis aux dispositifs centraux (3).

5. Procédé selon la revendication 4, **caractérisé en ce que** les données de profil maintenues dans la base de données (7) des dispositifs centraux (3) comprennent des renseignements médicaux qui sont ajoutés aux données textuelles du message d'urgence.

6. Procédé selon la revendication 1 ou 4, **caractérisé en ce que** la manipulation destinée à déclencher l'appel d'urgence comprend plusieurs étapes de manipulation lors de l'exécution desquelles l'utilisateur du TEG (1) effectuant la manipulation fournit des renseignements concernant le type d'urgence, la ou les personnes concernées et leur nombre, lesquels renseignements sont ajoutés sous forme de renseignements en texte clair au message d'appel d'urgence lorsqu'ils sont générés par l'application de programme.

7. Procédé selon la revendication 6, **caractérisé en ce que**, après l'exécution de la dernière étape de commande de la manipulation effectuée par le programme d'application, un compte à rebours est déclenché jusqu'à l'écoulement duquel l'émission du message d'urgence est retardée, dans lequel l'utilisateur a la possibilité, pendant le déroulement dudit compte à rebours, d'empêcher l'émission du message d'urgence par une autre manipulation et ainsi, d'annuler l'appel d'urgence.

8. Procédé selon la revendication 1, **caractérisé en ce qu'**une information textuelle concernant l'état de charge instantané de l'accumulateur du TEG (1) est ajoutée par l'application de programme au message d'urgence devant être envoyé aux dispositifs centraux (3) et devant être réacheminé par ceux-ci au poste d'intervention.

9. Procédé selon la revendication 1, **caractérisé en ce que**, lors du déclenchement d'un appel d'urgence, en plus de l'émission du message d'urgence généré par l'application de programme, un message d'information également généré par l'application de programme est transmis à une ou plusieurs personnes déterminées par l'utilisateur du TEG (1), dans lequel des renseignements concernant lesdites personnes, à savoir en particulier des renseignements concernant le type du message d'informations devant être transmis à une personne respective et concernant une adresse de réception devant être utilisée à cet effet de la personne concernée, peuvent être stockés, dans un mode de configuration de l'application de programme, dans une mémoire du TEG (1) ou dans un dispositif terminal (2) couplé à ce dernier.

10. Procédé selon la revendication 1, **caractérisé en ce que**, dans le cas où aucune liaison n'existe avec les dispositifs centraux (3), le numéro d'appel d'urgence central valable dans le pays d'accueil actuel du TEG (1) est délivré de manière automatisée par l'application de programme sur un dispositif d'affichage du TEG (1) et/ou sur un dispositif terminal (2) couplé à ce dernier, dans lequel ledit numéro d'appel d'urgence, qui est constitué d'une information de réseau concernant un réseau de communication utilisé à l'instant courant avec le TEG (1) ou ayant pu être utilisé récemment avec le TEG (1) et le pays d'accueil de l'utilisateur, tiré de ladite information de réseau, est lu dans une mémoire, accessible par l'unité de commande exécutant l'application de programme, du TEG (1) ou d'un dispositif terminal (2) couplé à ce dernier.

11. Système d'envoi automatique d'un message d'urgence lors d'un appel d'urgence, comportant au moins un serveur (6) et des dispositifs centraux (3) comprenant une base de données (7) et comportant un TEG (1) relié par l'intermédiaire d'un réseau aux dispositifs terminaux (3), à savoir à un terminal de télécommunication mobile équipé d'une unité de commande et d'un émetteur-récepteur radio, dans lequel le TEG (1) ou un dispositif terminal (2) couplé à ce dernier et comportant également une unité de commande, est équipé d'une application de programme exécutable par l'unité de commande de l'appareil concerné, laquelle application de programme est conçue, lors du déclenchement d'un appel d'urgence, pour générer un message d'urgence contenant des renseignements concernant l'émetteur et des données textuelles concernant la situation de l'appel d'urgence ainsi que des données d'enregistrement acoustiques et optiques de l'environnement du TEG (1) détectées au moyen d'au moins un microphone et d'au moins une caméra et pour l'envoyer par l'intermédiaire de l'émetteur-récepteur radio du TEG (1) ainsi que par l'intermédiaire d'un réseau de télécommunication à support radio (5) aux dispositifs centraux (3) qui sont conçus pour traduire les parties textuelles du message d'appel d'urgence en la langue nationale du pays d'accueil correspondant à la localisation, **caractérisé en ce que**
a) le TEG (1) ou un dispositif terminal (2) couplé à ce dernier est conçu pour déclencher un appel d'urgence par une manipulation réalisée sur celui-ci ou déclenchée par un capteur du TEG (1) ou d'un dispositif terminal (3) couplé à ce dernier,
b) l'application de programme exécutable par l'unité de commande du TEG (1) ou par un dispositif terminal (2) couplé à ce dernier est conçue de manière à activer, lors du déclenchement d'un appel d'urgence, au moins un microphone et au moins une caméra du TEG (1) ou d'un dispositif terminal (2) couplé au TEG (1) pendant une durée prédéterminée et pour ajouter au message d'appel d'urgence, avant sa transmission aux dispositifs centraux (3), des données d'enregistrement de l'environnement du TEG (1) détecté au moyen dudit au moins un microphone et de ladite au moins une caméra,
c) les dispositifs centraux (3) sont conçus pour déterminer, sur la base des renseignements concernant l'émetteur reçus du TEG (1) avec le message d'urgence, la localisation de l'émetteur du message d'urgence et pour ajouter aux données textuelles du message d'urgence des renseignements en texte clair concernant la localisation déterminée,
d) les dispositifs centraux (3) sont conçus pour transmettre directement le message d'urgence, constitué des données textuelles traduites et soit directement des données d'enregistrement acoustiques et optiques ou d'un lien pointant sur les données d'enregistrement maintenues dans ce cas sur un serveur des dispositifs centraux (3), à un poste d'intervention (4) d'une autorité locale déterminée par utilisation d'un procédé de transmission autorisé dans le pays d'accueil pour contacter ledit poste d'intervention (4), dans lequel le procédé de transmission autorisé et l'adresse de télécommunication utilisée à cet effet du poste d'intervention (4) sont obtenus à partir d'une entrée de base de données maintenue dans le pays d'accueil dans la base de données (7) des dispositifs centraux (3) .

12. Système selon la revendication 11, **caractérisé en ce que** le TEG (1) est couplé à un dispositif terminal, **caractérisé en ce qu'**il s'agit d'un système d'appel d'urgence dans ou sur un véhicule.

13. Système selon la revendication 11, **caractérisé en ce que** le TEG (1) est couplé à un dispositif terminal (2), **caractérisé en ce qu'**il s'agit d'un terminal intégré à une pièce de vêtement de l'utilisateur ou d'un dispositif vestimentaire, à savoir d'un terminal pouvant être appliqué par l'utilisateur du TEG (1) sur son corps sous la forme d'un accessoire.

14. Système selon l'une quelconque des revendications 11 à 13, **caractérisé en ce que** le TEG (1) ou un dispositif terminal (2) couplé à ce dernier comprend un dispositif d'émission et de réception destiné à un système de positionnement par satellite.
